# EUROPEAN PATENT SPECIFICATION

(11) **EP 4 329 127 B1**
(45) Date of publication and mention of the grant of the patent: **13.08.2025**
(21) Application number: 23193572.7
(22) Date of filing: 25.08.2023
(51) Int. Cl.: H02J 3/00, H02J 3/38, H02J 3/40

(54) **BLACK START CONTROL METHOD BASED ON A PLURALITY OF CONVERTER SUBARRAYS AND APPARATUS**
SCHWARZSTARTSTEUERUNGSVERFAHREN AUF DER BASIS EINER VIELZAHL VON WANDLERSUBARRAYS UND VORRICHTUNG
PROCÉDÉ DE COMMANDE DE DÉMARRAGE DE NOIR BASÉ SUR UNE PLURALITÉ DE SOUS-RÉSEAUX DE CONVERTISSEURS ET APPAREIL

(30) Priority: 26.08.2022 CN 202211035721
(43) Date of publication of application: 28.02.2024
(73) Proprietor: Huawei Digital Power Technologies Co., Ltd., Shenzhen, Guangdong 518043 (CN)
(72) Inventor: ZHANG, Lingjie, 518043 Shenzhen (CN); XU, Zhiwu, 518043 Shenzhen (CN); YANG, Boping, 518043 Shenzhen (CN)
(74) Representative: Gill Jennings & Every LLP

(56) References cited:
- AU-A1- 2018 224 020
- CN-A- 112 952 912

## Description

### TECHNICAL FIELD

This application is applied to the field of power electronics technologies, and in particular, relates to a black start control method based on a plurality of converter subarrays and an apparatus.

### BACKGROUND

With development of power grid interconnection and long-distance electricity transmission technologies, a scale of a power system is increasingly expanding, power grids at all levels are constantly interconnected, and operating reliability and stability of the system are also constantly enhanced. However, due to an increasingly complex operating environment and unavoidable natural disasters, a network structure and dynamic features of the power system tend to be complex, and operating conditions are more demanding and difficult to predict. A risk of a large-scale power outage still exists. A black start of the power system is a process to start a unit with a self-starting capability when a large-scale power outage of the system occurs due to man-made factors, natural disasters, or device faults and no external power supply is available, to further drive a unit having no self-starting capability to start, and gradually expand a scope of system recovery, so that the entire system can be recovered and power can be supplied to users as soon as possible, and loss caused by power outages is minimized.

In a new power system, an energy storage system in the system or a power electronic converter in a photovoltaic system can be used to establish a power grid voltage, to implement a black start of the power grid, and recover power supply of the power grid. This type of black start method does not require additional power grid facilities, but requires only an original converter and control system to implement a black start operation. Generally, in a process of putting a first transformer and a transmission line in the power system into the power grid, a huge inrush current generated by switch-on may directly trigger a protection mechanism of a converter, resulting in a black start failure of the power grid. Therefore, a manner of first closing a circuit and then starting a power supply is generally used to prevent the inrush. However, when medium- and high-voltage transmission lines run in a stable state, large capacitive reactive load is generally distributed, and even far exceeds a rated capacity of a single converter subarray. Therefore, a plurality of converter subarrays need to be started and run at the same time to support establishment of a stable voltage of the power grid. When port impedance of the converter subarrays is inconsistent and communication delays between an upper-layer controller and the converter subarrays are inconsistent because the plurality of converter subarrays in the power grid are deployed in different positions and constructed in batches, when output voltages of the plurality of converter subarrays are controlled at the same time, problems such as a circulating current between the converter subarrays may occur, resulting in local overcurrent protection and a black start failure. As a result, reliability of a black start based on a plurality of converter subarrays is reduced.

AU2018224020A1 discloses systems and methods for black-starting a power system using a battery energy storage system. In one example implementation, a method includes obtaining, by the one or more controllers, a signal requesting a black-start of the power system using the battery energy storage system. The method further includes increasing, by one or more controllers, a system bus voltage to a nominal voltage level using the battery energy storage system for a start period according to a start ramp. The method further includes maintaining, by one or more controllers, the system bus voltage at about the nominal voltage level using the battery energy storage system during a normal period following the start period.

CN112952912A discloses an energy storage system which can comprise a plurality of energy storage modules, a plurality of direct current switches, at least two energy storage converters and a plurality of alternating current switches, wherein the plurality of energy storage modules are connected with the input ends of the at least two energy storage converters through the plurality of direct current switches, and the output ends of the at least two energy storage converters are connected to a parallel operation point in parallel through the plurality of alternating current switches.

### SUMMARY

The invention refers to a black start controller according to claim 1, and a corresponding black start control method according to claim 9. Preferred embodiments are defined in the dependent claims.

Embodiments of this application provide a black start control method based on a plurality of converter subarrays and an apparatus, to improve reliability of a black start performed based on coordination of the plurality of converter subarrays.

According to a first aspect, an embodiment of this application provides a black start controller based on a plurality of converter subarrays. At least one of the plurality of converter subarrays includes at least one converter, an input port of each of the plurality of converter subarrays is connected to a direct current source, and an output port of each of the plurality of converter subarrays is connected to a first alternating current bus through a first transformer and a control switch. The black start controller is configured to: sequentially perform working processes of a first voltage adjustment phase to an N^{th} voltage adjustment phase after controlling the control switch to be turned on and controlling a converter in each converter subarray to be powered on; and in an n^{th} voltage adjustment phase of the first voltage adjustment phase to the N^{th} voltage adjustment phase, synchronously send an n^{th} target voltage adjustment instruction to each converter subarray, to control each converter in the converter subarray to establish an n^{th} target alternating voltage, so that the n^{th} target alternating voltage is converted by the first transformer into an n^{th} target bus alternating voltage input to the first alternating current bus, where n and N are integers greater than 1, 1≤n≤N, the n^{th} target alternating voltage is greater than an (n-1)^{th} target alternating voltage, the n^{th} target bus alternating voltage is greater than an (n-1)^{th} target bus alternating voltage, and an N^{th} target bus alternating voltage is a rated alternating voltage of the first alternating current bus.

For example, in this application, a second target alternating voltage is greater than a first target alternating voltage, a third target alternating voltage is greater than the second target alternating voltage, ..., and an N^{th} target alternating voltage is greater than an (N-1)^{th} target alternating voltage. In addition, a second target bus alternating voltage is greater than a first target bus alternating voltage, a third target bus alternating voltage is greater than the second target bus alternating voltage, ..., the N^{th} target bus alternating voltage is greater than an (N-1)^{th} target bus alternating voltage, and the N^{th} target bus alternating voltage is the rated alternating voltage of the first alternating current bus.

In this embodiment of this application, a process of establishing the rated voltage of the first alternating current bus is divided into a plurality of phases. In each phase, a voltage is increased by a specific amplitude, and this process repeats until the rated voltage is established, to help a power grid establish a voltage and recover operation of a power system. In this way, a problem of a circulating current between subarrays in a black start process of a plurality of converter subarrays in a power station or micro grid system can be resolved, reliability of a black start of the power grid can be improved, and an application scenario of the black start of a plurality of converter subarrays can be enhanced, especially a black start scenario of a transmission line with a large reactive power.

For example, in the first voltage adjustment phase, the controller synchronously sends a first target voltage adjustment instruction to the converter subarray. Each converter in the converter subarray may establish a first target alternating voltage based on the first target voltage adjustment instruction. The first target alternating voltage is converted by a corresponding first transformer into a first target bus alternating voltage output to the first alternating current bus. In a second voltage adjustment phase, the controller synchronously sends a second target voltage adjustment instruction to the converter subarray. Each converter in the converter subarray may establish a second target alternating voltage based on the second target voltage adjustment instruction. The second target alternating voltage is converted by a corresponding first transformer into a second target bus alternating voltage output to the first alternating current bus. The rest may be deduced by analogy, and details are not described herein again.

In some possible implementations, the black start controller includes a first controller and a plurality of second controllers, the first controller is communicatively connected to the plurality of second controllers, a converter in each converter subarray has a drive controller, the plurality of second controllers and the plurality of converter subarrays are disposed in a one-to-one correspondence, and the second controller is communicatively connected to a drive controller in a converter in a corresponding converter subarray. In addition, the first controller is configured to synchronously send the n^{th} target voltage adjustment instruction to each of the plurality of second controllers based on an n^{th} piece of target alternating voltage data in a pre-established adjustment sequence in the n^{th} voltage adjustment phase. Any one of the plurality of second controllers is configured to send an n^{th} voltage output instruction to a communicatively connected drive controller based on the received n^{th} target voltage adjustment instruction. The drive controller is configured to control, based on the received n^{th} voltage output instruction, a corresponding converter to establish the n^{th} target alternating voltage. The adjustment sequence has a first piece of target alternating voltage data to an N^{th} piece of target alternating voltage data that are sequentially arranged.

For example, the second controller and a corresponding converter subarray may be disposed in a same area. For example, the second controller is disposed in an operation area in which a corresponding converter subarray is located.

For example, an uninterrupted power supply (Uninterrupted Power Supply, UPS) is further disposed in the power system, and the UPS is connected to each second controller, and is configured to store electric energy transmitted on a power grid before the power grid or an electric device is powered off, and provide the stored electric energy to the second controller when the power grid or the electric device is powered off, to implement a black start. In actual use, the power system further includes a power module bridged between the UPS and the second controller, and the UPS may supply power to the second controller by using the power module.

For example, the first controller may have a communication component for communicating with an external device or an external server. The communication component may include network communication protocol modules such as a Wi-Fi module and a wired Ethernet communication protocol module, so that the first controller can implement communication of a control signal and a data signal with the external device or the external server.

For example, the second controller may have a communication component for communicating with an external device or an external server. The communication component may include network communication protocol modules such as a Wi-Fi module and a wired Ethernet communication protocol module, so that the second controller can implement communication of a control signal and a data signal with the external device or the external server.

Optionally, the communication component of the first controller is communicatively connected to the communication component of the second controller, so that the first controller and the second controller implement communication of a control signal and a data signal.

In some examples, when black start control needs to be performed, a staff inputs a black start enabling instruction to the first controller. After receiving the black start enabling instruction, the first controller selects a converter subarray participating in a black start, and determines that the selected converter subarray is powered on or available. Then, the first controller sends an initial black start preparation instruction to the second controller, and the second controller sends a target black start preparation instruction to a drive controller in a converter in the converter subarray based on the received initial black start preparation instruction. If the drive controller in the converter in the converter subarray completes preparation, the drive controller sends an initial black start preparation completion instruction to the second controller. The second controller sends a target black start preparation completion instruction to the first controller based on the initial black start preparation completion instruction. After receiving the target black start preparation complete instruction, the first controller may start to sequentially perform the working processes of the first voltage adjustment phase to the N^{th} voltage adjustment phase.

In other examples, a staff may alternatively input a black start enabling instruction to the first controller by using an upper-level controller. After receiving the black start enabling instruction, the first controller selects a converter subarray participating in a black start, and determines that the selected converter subarray is powered on or available. Then, the first controller sends an initial black start preparation instruction to the second controller, and the second controller sends a target black start preparation instruction to a drive controller in a converter in the converter subarray based on the received initial black start preparation instruction. If the drive controller in the converter in the converter subarray completes preparation, the drive controller sends an initial black start preparation completion instruction to the second controller. The second controller sends a target black start preparation completion instruction to the first controller based on the initial black start preparation completion instruction. After receiving the target black start preparation complete instruction, the first controller may start to sequentially perform the working processes of the first voltage adjustment phase to the N^{th} voltage adjustment phase. For example, the second controller may be further configured to monitor operating status information in the corresponding converter subarray, for example, a voltage, a current, a frequency, and a power (active power and reactive power) of a converter in the converter subarray. The first controller may obtain the information such as the voltage, the current, the frequency, and the power (active power and reactive power) of the converter subarray from the second controller.

The first controller stores the pre-established adjustment sequence. The adjustment sequence has the first piece of target alternating voltage data to the N^{th} piece of target alternating voltage data that are sequentially arranged.

A manner of storing the first piece of target alternating voltage data to the N^{th} piece of target alternating voltage data is not limited in this application. For example, the first piece of target alternating voltage data to the N^{th} piece of target alternating voltage data may be stored in the first controller in a binary, decimal, or hexadecimal manner.

For example, the first controller is configured to synchronously send the first target voltage adjustment instruction to the second controllers based on the first piece of target alternating voltage data in the pre-established adjustment sequence in the first voltage adjustment phase. In this case, the second controllers may synchronously receive the first target voltage adjustment instruction. The second controller is configured to send a first voltage output instruction to a communicatively connected drive controller in the converter subarray based on the received first target voltage adjustment instruction. The drive controller in the converter subarray is configured to control, based on the received first voltage output instruction, a converter in the converter subarray to convert electric energy of a direct current source into the first target alternating voltage of a power frequency alternating current, to establish the first target alternating voltage V₁. The rest may be deduced by analogy, and details are not described herein again.

In some possible implementations, the adjustment sequence further includes one or more pieces of power equalization control data. In addition, in the adjustment sequence, the n^{th} piece of target alternating voltage data corresponds to and adjacent to a q^{th} piece of power equalization control data, and the n^{th} piece of target alternating voltage data is set before the q^{th} piece of power equalization control data. For example, the adjustment sequence includes a plurality of pieces of power equalization control data. If the adjustment sequence includes Q pieces of power equalization control data, the adjustment sequence includes a first piece of power equalization control data to a Q^{th} piece of power equalization control data. Q is an integer greater than 1, q is a positive integer, and 1≤q≤Q.

For example, the first controller is further configured to: determine a q^{th} target power of each converter subarray based on the q^{th} piece of power equalization control data in the adjustment sequence, and synchronously send, to the corresponding second controller in each converter subarray based on the q^{th} target power of each converter subarray, a q^{th} power adjustment instruction carrying the q^{th} corresponding target power. The second controller is further configured to send a q^{th} power output instruction to the communicatively connected drive controller based on the received q^{th} power adjustment instruction. The drive controller is further configured to control, based on the received q^{th} power output instruction, the corresponding converter to output the q^{th} target power.

For example, the first controller is further configured to: determine a first target power of the converter subarray based on the first piece of power equalization control data in the adjustment sequence, and synchronously send, to the second controller based on the first target power of the converter subarray, a first power adjustment instruction carrying the first target power. In addition, the second controller is further configured to send the first power output instruction to the communicatively connected drive controller in the converter subarray based on the received first power adjustment instruction carrying the first target power. The drive controller in the converter subarray is further configured to: control, based on the received first power output instruction, the corresponding converter to output the first target power, and control power equalization between converter subarrays, so that a problem such as load power unequalization can be resolved. The rest may be deduced by analogy, and details are not described herein again.

In some examples, in the adjustment sequence, a quantity of pieces of the power equalization control data is the same as a quantity of pieces of the target alternating voltage data. In addition, in the adjustment sequence, the target alternating voltage data and the power equalization control data are alternately arranged. In other words, Q=N. The adjustment sequence includes the first piece of target alternating voltage data, the first piece of power equalization control data, the second piece of target alternating voltage data, the second piece of power equalization control data, the third piece of target alternating voltage data, the third piece of power equalization control data, ..., the N^{th} piece of target alternating voltage data, and the Q^{th} piece of power equalization control data.

In other examples, in the adjustment sequence, a quantity of pieces of the power equalization control data is less than a quantity of pieces of the target alternating voltage data. In addition, in the adjustment sequence, at least one piece of target alternating voltage data is set between two adjacent pieces of power equalization control data. In other words, Q<N. In the adjustment sequence, no power equalization control data may be set between some of the target alternating voltage data.

In some possible implementations, the first controller is further configured to: obtain a power of the output port of each converter subarray, determine an average power value of each converter subarray based on the power of the output port of each converter subarray and a quantity of converters in each converter subarray, and determine the determined average power value of each converter subarray as a q^{th} target power of each converter subarray.

For example, the first controller may obtain the power of the output port of each converter subarray from a monitor system. Alternatively, the first controller may obtain the power of the output port of the converter subarray from the first controller corresponding to each converter subarray.

In some possible implementations, the drive controller is further configured to: after controlling a corresponding converter to establish an n^{th} target alternating voltage, control the corresponding converter to correct a phase of the established n^{th} target alternating voltage based on an alternating voltage of an output port of a converter subarray in which the converter is located.

For example, the drive controller in each converter of each converter subarray is further configured to: after controlling a corresponding converter to establish an n^{th} target alternating voltage, control the corresponding converter to correct a phase of the established n^{th} target alternating voltage based on an alternating voltage of an output port of a converter subarray in which the converter is located. For example, the drive controller is further configured to: after controlling a corresponding converter to establish the first target alternating voltage, control the corresponding converter to correct a phase of the established first target alternating voltage based on an alternating voltage of an output port of a converter subarray in which the converter is located. The rest may be deduced by analogy, and details are not described herein again.

In some possible implementations, the power system further includes a switch control module, the first controller is further communicatively connected to the switch control module, and the switch control module is connected to the control switch. The first controller is further configured to send an identifier (for example, an ID) of each of the plurality of converter subarrays to the switch control module. The switch control module is configured to control a control switch connected to each of the plurality of converter subarrays to be turned on. The first controller is further configured to synchronously send a subarray start instruction to the second controller corresponding to each of the plurality of converter subarrays. The second controller is further configured to send a converter power-on instruction to the communicatively connected drive controller based on the received subarray start instruction. The drive controller is configured to control, based on the received converter power-on instruction, a corresponding converter to be powered on.

For example, first, the switch control module controls a control switch connected to each converter subarray to be turned on, so that the output port of each converter in each converter subarray and an input end of the first transformer are connected in a parallel manner. In addition, an output end of each first transformer and the first alternating current bus are connected in a parallel manner. In this way, the converters in the converter subarrays and an alternating current power grid that needs to be started and run can be connected to each other on a circuit. Then, the first controller synchronously sends a subarray start instruction to the second controller corresponding to each of the plurality of converter subarrays. Then, each second controller sends a converter power-on instruction to the communicatively connected drive controller based on the received subarray start instruction. Then, the drive controller controls, based on the received converter power-on instruction, a corresponding converter to be powered on, so that each converter in the converter subarray is already powered on or available before a black start is implemented.

In some possible implementations, the power system further includes a switch control module, the first controller is further communicatively connected to the switch control module, and the switch control module is connected to the control switch. The first controller is further configured to send an identifier (for example, an ID) of each of the plurality of converter subarrays to the switch control module. The switch control module is configured to: control control switches connected to a first part of converter subarrays in the plurality of converter subarrays to be turned on, and control control switches connected to a second part of converter subarrays in the plurality of converter subarrays to be turned on. A quantity of converter subarrays in the first part of converter subarrays is less than a quantity of converter subarrays in the second part of converter subarrays. The first controller is further configured to: after the control switches connected to the first part of converter subarrays are turned on, synchronously send a first part of subarray start instructions to second controllers corresponding to the first part of converter subarrays, and synchronously send initial voltage adjustment instructions to the second controllers corresponding to the first part of converter subarrays; and after the control switches connected to the second part of converter subarrays are turned on, synchronously send a second part of subarray start instructions to second controllers corresponding to the second part of converter subarrays. The second controllers corresponding to the first part of converter subarrays are further configured to: send, based on the received first part of subarray start instructions, converter power-on instructions to the communicatively connected drive controllers, and send initial voltage output instructions to the communicatively connected drive controllers based on the received initial voltage adjustment instructions. The second controllers corresponding to the second part of converter subarrays are further configured to send converter power-on instructions to the communicatively connected drive controllers based on the received second part of subarray start instructions. The drive controller in each converter subarray is configured to control, based on the received converter power-on instruction, a corresponding converter to be powered on. The drive controller communicatively connected to the second controller corresponding to the first part of converter subarrays is further configured to control, based on the received initial voltage output instruction, the corresponding converter to establish an initial alternating voltage, so that the initial alternating voltage is converted by the first transformer into an initial bus alternating voltage input to the first alternating current bus. The initial bus alternating voltage is less than the first target bus alternating voltage.

For example, first, the switch control module may control control switches connected to the first part of converter subarrays in the plurality of converter subarrays to be turned on, so that an output port of each converter in each of the first part of converter subarrays and an input end of a corresponding transformer are connected in a parallel manner, and output ends of transformers corresponding to the first part of converter subarrays and the first alternating current bus are connected. Then, the first controller synchronously sends the first part of subarray start instructions to the second controllers corresponding to the first part of converter subarrays. Then, the second controllers corresponding to the first part of converter subarrays send converter power-on instructions to the communicatively connected drive controllers based on the received first part of subarray start instructions. Then, the drive controller controls, based on the received converter power-on instruction, a corresponding converter to be powered on, so that each converter in the first part of converter subarrays is already powered on or available before the black start is implemented. Then, the first controller synchronously sends the initial voltage adjustment instruction to the corresponding second controller in each of the first part of converter subarrays. Then, the corresponding second controller in each of the first part of converter subarrays sends the initial voltage output instruction to the communicatively connected drive controller based on the received initial voltage adjustment instruction. Then, the drive controller controls, based on the received initial voltage output instruction, a corresponding converter to establish an initial alternating voltage, so that the initial alternating voltage is converted by the first transformer into the initial bus alternating voltage input to the first alternating current bus. Then, the switch control module controls the control switches connected to the second part of converter subarrays in the plurality of converter subarrays to be turned on. Then, the first controller synchronously sends the second part of subarray start instructions to the second controllers corresponding to the second part of converter subarrays. Then, the second controllers corresponding to the second part of converter subarrays send converter power-on instructions to the communicatively connected drive controllers based on the received second part of subarray start instructions. The drive controller controls, based on the received converter power-on instruction, a corresponding converter to be powered on, so that each converter in the second part of converter subarrays is already powered on or available before the black start is implemented.

For example, a quantity of converter subarrays in the first part of converter subarrays is less than a quantity of converter subarrays in the second part of converter subarrays. For example, the first part of converter subarrays include one of the plurality of converter subarrays, and the second part of converter subarrays include other converter subarrays of the plurality of converter subarrays other than the first part of converter subarrays.

For example, the UPS is further connected to the switch control module, and is configured to provide stored electric energy to the switch control module when the power grid or the electric device is powered off, to implement the black start.

In some possible implementations, each converter in each converter subarray is a voltage source converter. The second controller is further configured to synchronously send the n^{th} voltage output instruction to a drive controller in each converter in the corresponding converter subarray.

For example, the second controller is configured to synchronously send the first voltage output instruction to the drive controller in each converter in the corresponding converter subarray, so that the drive controller in each converter in the converter subarray controls a switching frequency of a switch in the corresponding converter based on the received first voltage output instruction, to convert electric energy of a direct current source into the first target alternating voltage of a power frequency alternating current, and establish the first target alternating voltage. In addition, a process in which the second controller controls establishment of other target alternating voltages may be deduced by analogy. Details are not described herein again.

In some possible implementations, each converter in each converter subarray is a voltage source converter. In each converter subarray, one converter is a master converter, and other converters are slave converters. The second controller is further configured to send the n^{th} voltage output instruction to a drive controller in a master converter in the corresponding converter subarray. The drive controller connected to the master converter is further configured to: control, based on the received n^{th} voltage output instruction, the master converter to establish the n^{th} target alternating voltage, and send a slave voltage output instruction to a drive controller in the slave converter based on the received n^{th} voltage output instruction. The drive controller in the slave converter is configured to control, based on the received slave voltage output instruction, the slave converter to establish the n^{th} target alternating voltage.

For example, in a converter subarray, one converter is a master converter, and other converters are slave converters. The second controller corresponding to the converter subarray is configured to send the n^{th} voltage output instruction to a drive controller in the master converter in the converter subarray. The drive controller connected to the master converter in the converter subarray is further configured to: control, based on the received n^{th} voltage output instruction, the master converter to establish the n^{th} target alternating voltage, and send a slave voltage output instruction to a drive controller in the slave converter in the converter subarray based on the received n^{th} voltage output instruction. The drive controller in the slave converter in the converter subarray is configured to control, based on the received slave voltage output instruction, the slave converter to establish the n^{th} target alternating voltage.

In some possible implementations, in each converter subarray, one converter is a voltage source converter, and other converters are current source converters. The second controller is further configured to send the n^{th} voltage output instruction to a drive controller connected to the voltage source converter.

For example, in a converter subarray, one converter is a voltage source converter, and other converters are current source converters. The second controller corresponding to the converter subarray is further configured to send the n^{th} voltage output instruction to a drive controller connected to the voltage source converter in the converter subarray. A voltage of an output port of a current source converter in the converter subarray may follow a voltage of an output port of the voltage source converter.

The power system in this application is applicable to scenarios such as a photovoltaic power generation system, an energy storage power station, and a microgrid.

A specific structure of the converter subarray is not limited in this application. For example, in this application, the converter subarray may include a converter and a monitor. The converter may have a drive controller, and a switching frequency of a switch in the converter is controlled by using the drive controller, so that the converter converts electric energy in a direct current source into a power frequency (for example, 50 Hz) alternating current.

A specific implementation of the direct current source is not limited in this application. For example, the direct current source may be set to an energy storage apparatus. In this case, the converter is an energy storage converter, the converter subarray is an energy storage converter subarray, and the energy storage converter may convert electric energy in the energy storage apparatus into a power frequency (for example, 50 Hz) alternating current. Alternatively, the direct current source may be set to a photovoltaic power generation apparatus. In this case, the converter is a photovoltaic converter, the converter subarray is a photovoltaic converter subarray, and the photovoltaic converter may convert electric energy in the photovoltaic power generation apparatus into a power frequency (for example, 50 Hz) alternating current.

It should be noted that a power frequency is generally a mains frequency. In China, the power frequency is 50 Hz. In other countries, the power frequency is 60 Hz. If a frequency of the power frequency alternating current is 50 Hz, a power frequency cycle is 0.02 seconds.

In some possible implementations, in the first voltage adjustment phase to the N^{th} voltage adjustment phase, there is an interval between start moments of every two adjacent voltage adjustment phases, and the interval is greater than one power frequency cycle. For example, there is an interval between a start moment of the second voltage adjustment phase and a start moment of the first voltage adjustment phase, and the interval is greater than one power frequency cycle. There is an interval between a start moment of the third voltage adjustment phase and the start moment of the second voltage adjustment phase, and the interval is greater than one power frequency cycle.... There is an interval between a start moment of the N^{th} voltage adjustment phase and a start moment of the (N-1)^{th} voltage adjustment phase, and the interval is greater than one power frequency cycle.

For example, intervals between start moments of every two adjacent voltage adjustment phases are the same. For example, the interval between the start moment of the second voltage adjustment phase and the start moment of the first voltage adjustment phase, the interval between the start moment of the third voltage adjustment phase and the start moment of the second voltage adjustment phase, ..., and the interval between the start moment of the N^{th} voltage adjustment phase and the start moment of the (N-1)^{th} voltage adjustment phase are the same.

Optionally, the interval is K times the power frequency cycle. For example, if K=2, the interval is twice the power frequency cycle. Alternatively, if K=3, the interval is three times of the power frequency cycle. Alternatively, if K=4, the interval is four times of the power frequency cycle. It should be noted that a specific value of K may be determined according to an actual application requirement. This is not limited herein.

In some possible implementations, in the first voltage adjustment phase to the N^{th} voltage adjustment phase, at least some voltage differences in voltage differences between target alternating voltages in every two adjacent voltage adjustment phases are the same. For example, in the first voltage adjustment phase to the N^{th} voltage adjustment phase, absolute values of at least some voltage differences in absolute values of voltage differences between target alternating voltages in every two adjacent voltage adjustment phases are the same.

For example, absolute values of at least some voltage differences in absolute values of voltage differences between target alternating voltages in every two adjacent voltage adjustment phases may be the same. For example, an absolute value of a voltage difference between the first target alternating voltage and the second target alternating voltage is the same as an absolute value of a voltage difference between the second target alternating voltage and the third target alternating voltage. The absolute value of the voltage difference between the second target alternating voltage and the third target alternating voltage is the same as an absolute value of a voltage difference between the third target alternating voltage and the fourth target alternating voltage. The absolute value of the voltage difference between the third target alternating voltage and the fourth target alternating voltage is the same as an absolute value of a voltage difference between the fourth target alternating voltage and the fifth target alternating voltage. The absolute value of the voltage difference between the fourth target alternating voltage and the fifth target alternating voltage is the same as an absolute value of a voltage difference between the fifth target alternating voltage and the sixth target alternating voltage. The rest may be deduced by analogy, and details are not described herein again.

For example, voltage differences between target alternating voltages in every two adjacent voltage adjustment phases may alternatively be the same. For example, the absolute value of the voltage difference between the first target alternating voltage and the second target alternating voltage, the absolute value of the voltage difference between the second target alternating voltage and the third target alternating voltage, and the absolute value of the voltage difference between the third target alternating voltage and the fourth target alternating voltage, the absolute value of the voltage difference between the fourth target alternating voltage and the fifth target alternating voltage, the absolute value of the voltage difference between the fifth target alternating voltage and the sixth target alternating voltage are the same. The rest may be deduced by analogy, and details are not described herein again.

In some possible implementations, in the first voltage adjustment phase to the N^{th} voltage adjustment phase, voltage differences between target alternating voltages in every two adjacent voltage adjustment phases sequentially increase. For example, in the first voltage adjustment phase to the N^{th} voltage adjustment phase, absolute values of voltage differences between target alternating voltages in every two adjacent voltage adjustment phases sequentially increase. For example, an absolute value of a voltage difference between the first target alternating voltage and the second target alternating voltage is less than an absolute value of a voltage difference between the second target alternating voltage and the third target alternating voltage. The absolute value of the voltage difference between the second target alternating voltage and the third target alternating voltage is less than an absolute value of a voltage difference between the third target alternating voltage and the fourth target alternating voltage. The absolute value of the voltage difference between the third target alternating voltage and the fourth target alternating voltage is less than an absolute value of a voltage difference between the fourth target alternating voltage and the fifth target alternating voltage. An absolute value of a voltage difference between the fifth target alternating voltage and the sixth target alternating voltage is less than an absolute value of a voltage difference between the sixth target alternating voltage and the seventh target alternating voltage. The rest may be deduced by analogy, and details are not described herein again.

In some possible implementations, in the first voltage adjustment phase to the N^{th} voltage adjustment phase, voltage differences between target alternating voltages in every two adjacent voltage adjustment phases sequentially decrease. For example, in the first voltage adjustment phase to the N^{th} voltage adjustment phase, absolute values of voltage differences between target alternating voltages in every two adjacent voltage adjustment phases sequentially decrease. For example, an absolute value of a voltage difference between the first target alternating voltage and the second target alternating voltage is greater than an absolute value of a voltage difference between the second target alternating voltage and the third target alternating voltage. The absolute value of the voltage difference between the second target alternating voltage and the third target alternating voltage is greater than an absolute value of a voltage difference between the third target alternating voltage and the fourth target alternating voltage. The absolute value of the voltage difference between the third target alternating voltage and the fourth target alternating voltage is greater than an absolute value of a voltage difference between the fourth target alternating voltage and the fifth target alternating voltage. An absolute value of a voltage difference between the fifth target alternating voltage and the sixth target alternating voltage is greater than an absolute value of a voltage difference between the sixth target alternating voltage and the seventh target alternating voltage. The rest may be deduced by analogy, and details are not described herein again.

According to a second aspect, an embodiment of this application further provides a primary controller based on a plurality of converter subarrays. At least one of the plurality of converter subarrays includes at least one converter, an input port of each of the plurality of converter subarrays is connected to a direct current source, and an output port of each of the plurality of converter subarrays is connected to a first alternating current bus through a first transformer and a control switch. The primary controller is communicatively connected to a plurality of second controllers, the plurality of second controllers and the plurality of converter subarrays are disposed in a one-to-one correspondence, and the second controller is configured to control a corresponding converter subarray to work. The primary controller is configured to: sequentially perform working processes of a first voltage adjustment phase to an N^{th} voltage adjustment phase after controlling the control switch to be turned on and controlling a converter in each converter subarray to be powered on; and in an n^{th} voltage adjustment phase of the first voltage adjustment phase to the N^{th} voltage adjustment phase, synchronously send an n^{th} target voltage adjustment instruction to each second controller, so that each second controller controls a corresponding converter subarray to establish an n^{th} target alternating voltage, and the n^{th} target alternating voltage is converted by the first transformer into an n^{th} target bus alternating voltage input to the first alternating current bus, where n and N are integers greater than 1, 1≤n≤N, the n^{th} target alternating voltage is greater than an (n-1)^{th} target alternating voltage, the n^{th} target bus alternating voltage is greater than an (n-1)^{th} target bus alternating voltage, and an N^{th} target bus alternating voltage is a rated alternating voltage of the first alternating current bus.

For example, in this application, a second target alternating voltage is greater than a first target alternating voltage, a third target alternating voltage is greater than the second target alternating voltage, ..., and an N^{th} target alternating voltage is greater than an (N-1)^{th} target alternating voltage. In addition, a second target bus alternating voltage is greater than a first target bus alternating voltage, a third target bus alternating voltage is greater than the second target bus alternating voltage, ..., the N^{th} target bus alternating voltage is greater than an (N-1)^{th} target bus alternating voltage, and the N^{th} target bus alternating voltage is the rated alternating voltage of the first alternating current bus.

In this embodiment of this application, the primary controller divides a process of establishing the rated voltage of the first alternating current bus into a plurality of phases. In each phase, a voltage is increased by a specific amplitude, and this process repeats until the rated voltage is established, to help a power grid establish a voltage and recover operation of a power system. In this way, a problem of a circulating current between subarrays in a black start process of a plurality of converter subarrays in a power station or micro grid system can be resolved, reliability of a black start of the power grid can be improved, and an application scenario of the black start of a plurality of converter subarrays can be enhanced, especially a black start scenario of a transmission line with a large reactive power.

In some possible implementations, a converter in each converter subarray has a drive controller, and the second controller is communicatively connected to a drive controller in a converter in a corresponding converter subarray. In addition, the primary controller is configured to synchronously send, in the n^{th} voltage adjustment phase, the n^{th} target voltage adjustment instruction to each second controller based on an n^{th} piece of target alternating voltage data in a pre-established adjustment sequence, so that the second controller sends an n^{th} voltage output instruction to a communicatively connected drive controller based on the received n^{th} target voltage adjustment instruction, to control the drive controller to control a corresponding converter to establish the n^{th} target alternating voltage, where the adjustment sequence includes a first piece of target alternating voltage data to an N^{th} piece of target alternating voltage data that are sequentially arranged.

In some possible implementations, the adjustment sequence further includes at least one piece of power equalization control data, in the adjustment sequence, the n^{th} piece of target alternating voltage data corresponds to and is adjacent to a q^{th} piece of power equalization control data in the at least one piece of power equalization control data, and the n^{th} piece of target alternating voltage data is set before the q^{th} piece of power equalization control data, where q is a positive integer.

The first controller is further configured to: determine a q^{th} target power of each converter subarray based on the q^{th} piece of power equalization control data in the adjustment sequence, and synchronously send, to the corresponding second controller in each converter subarray based on the q^{th} target power of each converter subarray, a q^{th} power adjustment instruction carrying the q^{th} corresponding target power, so that the second controller sends, based on the received q^{th} power adjustment instruction, a q^{th} power output instruction to a communicatively connected drive controller, to control the drive controller to control the corresponding converter to output the q^{th} target power.

In some possible implementations, in the adjustment sequence, a quantity of pieces of the power equalization control data is the same as a quantity of pieces of the target alternating voltage data, and in the adjustment sequence, the target alternating voltage data and the power equalization control data are alternately arranged.

In some possible implementations, in the adjustment sequence, a quantity of pieces of the power equalization control data is less than a quantity of pieces of the target alternating voltage data, and in the adjustment sequence, at least one piece of target alternating voltage data is set between two adjacent pieces of power equalization control data.

In some possible implementations, the primary controller is further configured to: obtain a power of the output port of each converter subarray, determine an average power value of each converter subarray based on the power of the output port of each converter subarray and a quantity of converters in each converter subarray, and determine the determined average power value of each converter subarray as a q^{th} target power of each converter subarray.

A working principle and a specific implementation of the primary controller are the same as the principle and the implementation of the first controller in the foregoing embodiment. Therefore, for an implementation of the primary controller, reference may be made to the specific implementation of the first controller in the foregoing embodiment for implementation, and details are not described herein again.

For technical effects of a corresponding solution in the second aspect, refer to technical effects that can be obtained according to a solution corresponding to the first controller in the first aspect. Repeated parts are not described herein again.

According to a third aspect, an embodiment of this application further provides a power system. The power system may include a plurality of direct current sources, a plurality of first transformers, a plurality of control switches, a plurality of converter subarrays, a first alternating current bus, and a black start controller. The plurality of converter subarrays one-to-one correspond to the plurality of direct current sources and one-to-one correspond to the plurality of first transformers, and one of the plurality of converter subarrays corresponds to at least one of the plurality of control switches. At least one of the plurality of converter subarrays includes at least one converter, an input port of each of the plurality of converter subarrays is connected to the direct current source, and an output port of each of the plurality of converter subarrays is connected to a first alternating current bus through a first transformer and a control switch. The black start controller is connected to the plurality of converter subarrays. The black start controller is configured to: sequentially perform working processes of a first voltage adjustment phase to an N^{th} voltage adjustment phase after controlling the control switch to be turned on and controlling a converter in each converter subarray to be powered on; and in an n^{th} voltage adjustment phase of the first voltage adjustment phase to the N^{th} voltage adjustment phase, synchronously send an n^{th} target voltage adjustment instruction to each converter subarray, to control each converter in the converter subarray to establish an n^{th} target alternating voltage, so that the n^{th} target alternating voltage is converted by the first transformer into an n^{th} target bus alternating voltage input to the first alternating current bus, where n and N are integers greater than 1, 1≤n≤N, the n^{th} target alternating voltage is greater than an (n-1)^{th} target alternating voltage, the n^{th} target bus alternating voltage is greater than an (n-1)^{th} target bus alternating voltage, and an N^{th} target bus alternating voltage is a rated alternating voltage of the first alternating current bus.

In this application, the first alternating current bus may be further connected to another transformer or transmission line, to form a power grid or a microgrid.

For example, the power system further includes a second transformer and a second alternating current bus, and is connected to a transmission line through the second alternating current bus, to form a power grid or a microgrid. In this way, when there is the n^{th} target bus alternating voltage on the first alternating current bus, the n^{th} target bus alternating voltage is converted by the second transformer to generate an n^{th} second bus alternating voltage. Specifically, when there is a first target bus alternating voltage on the first alternating current bus, the first target bus alternating voltage is converted by the second transformer to generate a 1^{st} second bus alternating voltage. When there is a second target bus alternating voltage on the first alternating current bus, the second target bus alternating voltage is converted by the second transformer to generate a 2^{nd} second bus alternating voltage. When there is a third target bus alternating voltage on the first alternating current bus, the third target bus alternating voltage is converted by the second transformer to generate a 3^{rd} second bus alternating voltage.... When there is the N^{th} target bus alternating voltage on the first alternating current bus, the N^{th} target bus alternating voltage is converted by the second transformer to generate an N^{th} second bus alternating voltage, and the N^{th} second bus alternating voltage is a rated voltage on the second alternating current bus.

The power system in this application is applicable to scenarios such as a photovoltaic power generation system, an energy storage power station, and a microgrid.

For technical effects of a corresponding solution in the third aspect, refer to technical effects that may be obtained according to a corresponding solution in the first aspect. Repeated parts are not described herein again.

According to a fourth aspect, an embodiment of this application further provides a black start control method based on a plurality of converter subarrays. At least one of the plurality of converter subarrays includes at least one converter, an input port of each of the plurality of converter subarrays is connected to a direct current source, and an output port of each of the plurality of converter subarrays is connected to a first alternating current bus through a first transformer and a control switch. The black start control method includes: sequentially performing working processes of a first voltage adjustment phase to an N^{th} voltage adjustment phase after controlling the control switch to be turned on and controlling a converter in each converter subarray to be powered on; and in an n^{th} voltage adjustment phase of the first voltage adjustment phase to the N^{th} voltage adjustment phase, synchronously sending an n^{th} target voltage adjustment instruction to each converter subarray, to control each converter in the converter subarray to establish an n^{th} target alternating voltage, so that the n^{th} target alternating voltage is converted by the first transformer into an n^{th} target bus alternating voltage input to the first alternating current bus, where n and N are integers greater than 1, 1≤n≤N, the n^{th} target alternating voltage is greater than an (n-1)^{th} target alternating voltage, the n^{th} target bus alternating voltage is greater than an (n-1)^{th} target bus alternating voltage, and an N^{th} target bus alternating voltage is a rated alternating voltage of the first alternating current bus.

For technical effects of a corresponding solution in the fourth aspect, refer to technical effects that may be obtained according to a corresponding solution in the first aspect. Repeated parts are not described herein again.

### BRIEF DESCRIPTION OF DRAWINGS

FIG. 1 is a schematic diagram of a structure of a power system according to an embodiment of this application;
FIG. 2 is a schematic diagram of a voltage adjustment phase according to an embodiment of this application;
FIG. 3 is a schematic diagram of a structure of a black start controller in a power system according to an embodiment of this application;
FIG. 4A and FIG. 4B are an interaction diagram of a specific embodiment of a black start control method according to an embodiment of the present invention; and
FIG. 5A and FIG. 5B are an interaction diagram of a specific embodiment of a black start control method according to another embodiment of the present invention.

### DESCRIPTION OF EMBODIMENTS

To make objectives, technical solutions, and advantages of this application clearer, the following further describes this application in detail with reference to the accompanying drawings. A specific operation method in a method embodiment may also be applied to an apparatus embodiment or a system embodiment. It should be noted that in description of this application, "at least one" means one or more, and "a plurality of" means two or more. In view of this, in embodiments of this application, "a plurality of" may also be understood as "at least two". The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects. In addition, it should be understood that in description of this application, terms such as "first" and "second" are merely used for distinguishing and description, but should not be understood as indicating or implying relative importance, or should not be understood as indicating or implying a sequence.

It should be noted that the "connection" in embodiments of this application refers to an electric connection, and the connection between two electrical elements may be a direct or indirect connection between the two electrical elements. For example, a connection between A and B may represent that A and B are directly connected to each other, or A and B are indirectly connected to each other by using one or more other electrical elements. For example, the connection between A and B may also represent that A is directly connected to C, C is directly connected to B, and A and B are connected to each other through C. In embodiments of this application, "coupling" may mean that two windings are coupled through an electromagnetic field, that is, electric energy may be transmitted between the two windings through the electromagnetic field. This mainly includes an energy conversion process of electric energy-magnetic field potential energy-electric energy.

It should be noted that switches in embodiments of this application may be one or more types of a plurality of types of switching devices such as a relay, a metal-oxide-semiconductor field-effect transistor (metal oxide semiconductor field effect transistor, MOSFET), a bipolar junction transistor (bipolar junction transistor, BJT), an insulated gate bipolar transistor (insulated gate bipolar transistor, IGBT), and a silicon carbide (SiC) MOSFET. Details are not described in embodiments of this application again. In addition, each switch may include a first electrode, a second electrode, and a control electrode, and the control electrode is configured to control closing or opening of the switch. When the switch is turned on, a current may be transmitted between the first electrode and the second electrode of the switch. When the switch is open, no current can be transmitted between the first electrode and the second electrode of the switch. The MOSFET is used as an example. The control electrode of the switch is a gate electrode. The first electrode of the switch may be a source electrode, and the second electrode may be a drain electrode. Alternatively, the first electrode may be a drain electrode, and the second electrode may be a source electrode.

The following clearly and completely describes the technical solutions in embodiments of this application with reference to the accompanying drawings in embodiments of this application.

With rapid development of the economy and society, an installed capacity and load of a power system continue to reach new highs. In addition, the ultra-high voltage alternating current and direct current electricity transmission develops rapidly, and a large scale of wind power generation, photovoltaic power generation, and microgrids are connected to the power grid. Dynamic features of the entire power system change greatly, and an operation point of the power system is getting closer to a stability limit. In this case, a risk of a massive power outage caused by a power failure or an improper operation is increasing.

After a massive power outage occurs in the power system, the economic and social impact of the outage is closely related to outage duration. Longer outage duration indicates that it is more difficult for the system to recover, and indicates a greater loss. A recovery process after a power outage in the system includes three phases: black start, grid recovery, and load recovery. The black start phase is the basis of the entire recovery process and importance of the black start phase is self-evident. When medium- and high-voltage transmission lines run in a stable state, large capacitive reactive load is generally distributed, and even far exceeds a rated capacity of a single converter subarray. Therefore, in the black start phase, a plurality of converter subarrays need to be started and run at the same time to support establishment of a stable voltage of the power grid. When port impedance of the converter subarrays is inconsistent and communication delays between an upper-layer controller and the converter subarrays are inconsistent because the plurality of converter subarrays in the power grid are deployed in different positions and constructed in batches, when output voltages of the plurality of converter subarrays are controlled at the same time, problems such as a circulating current between the converter subarrays may occur, resulting in local overcurrent protection and a black start failure. As a result, reliability of a black start based on a plurality of converter subarrays is reduced. In this embodiment of this application, a switch of each converter subarray is first turned on, so that each converter subarray is connected to an alternating current bus of an alternating current power grid that needs to be started and run. Then, a process of establishing a rated voltage of the alternating current bus is divided into a plurality of phases, and a voltage is increased by a specific amplitude in each phase until a rated voltage is established, to resolve a problem of a circulating current between subarrays in a black start process of a plurality of converter subarrays in a power station or a micro grid system, thereby improving black start reliability of the power grid, and enhancing an application scenario of multi-converter subarray cooperative black start, especially a black start scenario of a transmission line with a high reactive power.

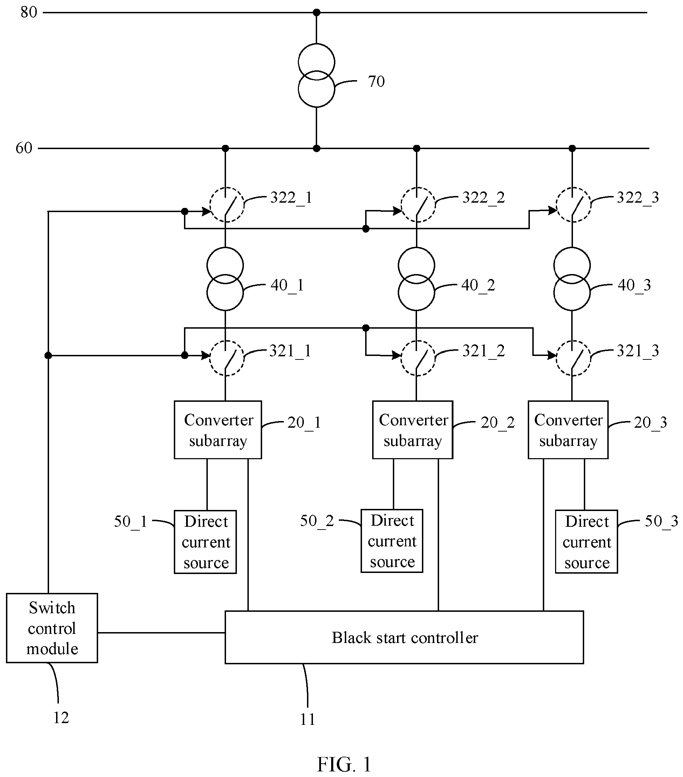

FIG. 1 is a schematic diagram of a structure of a power system according to an embodiment of this application. There may be a plurality of converter subarrays in this application, and the converter subarray may have one or more converters. This depends on whether a centralized or string converter technology is used. There are a plurality of direct current sources and a plurality of control switches. In this application, only three converter subarrays 20_1 to 20_3 are used as an example for illustration.

As shown in FIG. 1, in some embodiments provided in this application, the power system includes direct current sources 50_1 to 50_3, first transformers 40_1 to 40_3, control switches 321_1 to 322_3, the converter subarrays 20_1 to 20_3, a first alternating current bus 60, and a black start controller 11. The converter subarray 20_1 is disposed to correspond with the direct current source 50_1, the first transformer 40_1, and the control switches 321_1 and 322_1. An input port of the converter subarray 20_1 is connected to the direct current source 50_1, an output port of the converter subarray 20_1 is connected to an input end of the first transformer 40_1 through the control switch 321_1, and an output end of the first transformer 40_1 is connected to the first alternating current bus 60 through the control switch 322_1. The converter subarray 20_2 is disposed to correspond with the direct current source 50_2, the first transformer 40_2, and the control switches 321_2 and 322_2. An input port of the converter subarray 20_2 is connected to the direct current source 50_2, an output port of the converter subarray 20_2 is connected to an input end of the first transformer 40_2 through the control switch 321_2, and an output end of the first transformer 40_2 is connected to the first alternating current bus 60 through the control switch 322_2. The converter subarray 20_3 is disposed to correspond with the direct current source 50_3, the first transformer 40_3, and the control switches 321_3 and 322_3. An input port of the converter subarray 20_3 is connected to the direct current source 50_3, an output port of the converter subarray 20_3 is connected to an input end of the first transformer 40_3 through the control switch 321_3, and an output end of the first transformer 40_3 is connected to the first alternating current bus 60 through the control switch 322_3.

In this application, the first alternating current bus 60 may be further connected to another transformer or transmission line, to form a power grid or a microgrid.

For example, as shown in FIG. 1, the power system further includes a second transformer 70 and a second alternating current bus 80, and is connected to a transmission line through the second alternating current bus 80, to form a power grid or a microgrid. In this way, when there is an n^{th} target bus alternating voltage on the first alternating current bus 60, the n^{th} target bus alternating voltage is converted by the second transformer 70 to generate an n^{th} second bus alternating voltage. Specifically, when there is a first target bus alternating voltage on the first alternating current bus 60, the first target bus alternating voltage is converted by the second transformer 70 to generate a 1^{st} second bus alternating voltage. When there is a second target bus alternating voltage on the first alternating current bus 60, the second target bus alternating voltage is converted by the second transformer 70 to generate a 2^{nd} second bus alternating voltage. When there is a third target bus alternating voltage on the first alternating current bus 60, the third target bus alternating voltage is converted by the second transformer 70 to generate a 3^{rd} second bus alternating voltage.... When there is an N^{th} target bus alternating voltage on the first alternating current bus 60, the N^{th} target bus alternating voltage is converted by the second transformer 70 to generate an N^{th} second bus alternating voltage, and the N^{th} second bus alternating voltage is a rated voltage on the second alternating current bus 80.

The power system in this application is applicable to scenarios such as a photovoltaic power generation system, an energy storage power station, and a microgrid.

A specific structure of the converter subarray is not limited in this application. For example, in this application, the converter subarray may include a converter and a monitor. The converter may have a drive controller, and a switching frequency of a switch in the converter is controlled by using the drive controller, so that the converter converts electric energy in a direct current source into a power frequency (for example, 50 Hz) alternating current.

A specific implementation of the direct current source is not limited in this application. For example, the direct current source may be set to an energy storage apparatus. In this case, the converter is an energy storage converter, the converter subarray is an energy storage converter subarray, and the energy storage converter may convert electric energy in the energy storage apparatus into a power frequency (for example, 50 Hz) alternating current. Alternatively, the direct current source may be set to a photovoltaic power generation apparatus. In this case, the converter is a photovoltaic converter, the converter subarray is a photovoltaic converter subarray, and the photovoltaic converter may convert electric energy in the photovoltaic power generation apparatus into a power frequency (for example, 50 Hz) alternating current.

It should be noted that a power frequency is generally a mains frequency. In China, the power frequency is 50 Hz. In other countries, the power frequency is 60 Hz. If a frequency of the power frequency alternating current is 50 Hz, a power frequency cycle is 0.02 seconds.

As shown in FIG. 1, the power system further includes a switch control module 12, and a first controller is further communicatively connected to the switch control module 12. The switch control module 12 is separately connected to the control switches 321_1 to 322_3. The first controller is further configured to send an identifier (for example, an ID) of each of the plurality of converter subarrays to the switch control module. The switch control module 12 is configured to: first control the control switches 321_1 to 322_3 connected to the converter subarrays 20_1 to 20_3 to be turned on, so that an output port of each converter in the converter subarray 20_1 and the input end of the first transformer 40_1 are connected in a parallel manner, an output port of each converter in the converter subarray 20_2 and the input end of the first transformer 40_2 are connected in a parallel manner, and an output port of each converter in the converter subarray 20_3 and the input end of the first transformer 40_3 are connected in a parallel manner. In addition, output ends of the first transformers 40_1 to 40_3 and the first alternating current bus 60 are connected in a parallel manner. In this way, the converters in the converter subarrays and an alternating current power grid that needs to be started and run can be connected to each other on a circuit.

For example, as shown in FIG. 1, the black start controller 11 is configured to sequentially perform working processes of a first voltage adjustment phase to an N^{th} voltage adjustment phase after controlling the control switches 321_1 to 322_3 to be turned on and controlling a converter in each of the converter subarrays 20_1 to 20_3 to be powered on. In an n^{th} voltage adjustment phase, the black start controller 11 synchronously sends an n^{th} target voltage adjustment instruction to each of the converter subarrays 20_1 to 20_3, to control each converter in each of the converter subarrays 20_1 to 20_3 to establish an n^{th} target alternating voltage, so that the n^{th} target alternating voltage is converted by the corresponding first transformer into an n^{th} target bus alternating voltage input to the first alternating current bus 60.

For example, in the first voltage adjustment phase, the black start controller 11 synchronously sends a first target voltage adjustment instruction to the converter subarrays 20_1 to 20_3. Each converter in the converter subarrays 20_1 to 20_3 may establish a first target alternating voltage based on the first target voltage adjustment instruction. The first target alternating voltage is converted by the corresponding first transformers 40_1 to 40_3 into a first target bus alternating voltage output to the first alternating current bus 60. In a second voltage adjustment phase, the black start controller 11 synchronously sends a second target voltage adjustment instruction to the converter subarrays 20_1 to 20_3. Each converter in the converter subarrays 20_1 to 20_3 may establish a second target alternating voltage based on the second target voltage adjustment instruction. The second target alternating voltage is converted by the corresponding first transformers 40_1 to 40_3 into a second target bus alternating voltage output to the first alternating current bus 60. The rest may be deduced by analogy, and details are not described herein again.

In addition, in this application, the second target alternating voltage is greater than the first target alternating voltage, a third target alternating voltage is greater than the second target alternating voltage, ..., and the N^{th} target alternating voltage is greater than an (N-1)^{th} target alternating voltage. In addition, the second target bus alternating voltage is greater than the first target bus alternating voltage, a third target bus alternating voltage is greater than the second target bus alternating voltage, ..., the N^{th} target bus alternating voltage is greater than an (N-1)^{th} target bus alternating voltage, and the N^{th} target bus alternating voltage is a rated alternating voltage of the first alternating current bus 60.

In this embodiment of this application, a process of establishing the rated voltage of the first alternating current bus 60 is divided into a plurality of phases. In each phase, a voltage is increased by a specific amplitude, and this process repeats until the rated voltage is established, to help a power grid establish a voltage and recover operation of a power system. In this way, a problem of a circulating current between subarrays in a black start process of a plurality of converter subarrays in a power station or micro grid system can be resolved, reliability of a black start of the power grid can be improved, and an application scenario of the black start of a plurality of converter subarrays can be enhanced, especially a black start scenario of a transmission line with a large reactive power.

For example, the black start controller 11 is further configured to control each converter in the converter subarrays 20_1 to 20_3 to be powered on, so that each converter in the converter subarrays 20_1 to 20_3 is already powered on or available before a black start is implemented.

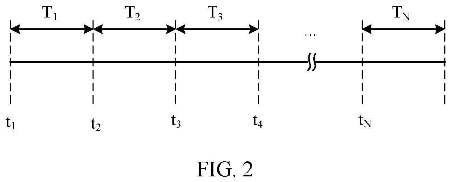

FIG. 2 is a schematic diagram of a voltage adjustment phase according to an embodiment of this application. T₁ represents the first voltage adjustment phase, T2 represents the second voltage adjustment phase, T₃ represents a third voltage adjustment phase, ..., and T_{N} represents the N^{th} voltage adjustment phase; t₁ represents a start moment of the first voltage adjustment phase, t₂ represents a start moment of the second voltage adjustment phase, t₃ represents a start moment of the third voltage adjustment phase, ..., and t_{N} represents a start moment of the N^{th} voltage adjustment phase. In the first voltage adjustment phase T₁ to the N^{th} voltage adjustment phase T_{N}, there is an interval between start moments of every two adjacent voltage adjustment phases, and the interval is greater than one power frequency cycle. For example, there is an interval t₂-t₁ between the start moment t₂ of the second voltage adjustment phase T₂ and the start moment t₁ of the first voltage adjustment phase T₁, and t₂-t₁ is greater than one power frequency cycle. There is an interval t₃-t₂ between the start moment t₃ of the third voltage adjustment phase T₃ and the start moment t₂ of the second voltage adjustment phase T₂, and t₃-t₂ is greater than one power frequency cycle.... There is an interval t_{N}-t_{N-1} between the start moment t_{N} of the N^{th} voltage adjustment phase T_{N} and the start moment t_{N-1} of the (N-1)^{th} voltage adjustment phase T_{N}, and t_{N}-t_{N-1} is greater than one power frequency cycle.

For example, intervals between start moments of every two adjacent voltage adjustment phases are the same. For example, the interval t₂-t₁, the interval t₃-t₂, ..., and the interval t_{N}-t_{N-1} are the same.

Optionally, the interval is K times the power frequency cycle. For example, if K=2, the interval t₂-t₁, the interval t₃-t₂, ..., and the interval t_{N}-t_{N-1} each are twice the power frequency cycle. Alternatively, if K=3, the interval t₂-t₁, the interval t₃-t₂, ..., and the interval t_{N}-t_{N-1} each are three times the power frequency cycle. Alternatively, if K=4, the interval t₂-t₁, the interval t₃-t₂, ..., and the interval t_{N}-t_{N-1} each are four times the power frequency cycle. It should be noted that a specific value of K may be determined according to an actual application requirement. This is not limited herein.

In some examples, in the first voltage adjustment phase to the N^{th} voltage adjustment phase, at least some voltage differences in voltage differences between target alternating voltages in every two adjacent voltage adjustment phases are the same. For example, in the first voltage adjustment phase to the N^{th} voltage adjustment phase, absolute values of at least some voltage differences in absolute values of voltage differences between target alternating voltages in every two adjacent voltage adjustment phases are the same.

For example, absolute values of at least some voltage differences in absolute values of voltage differences between target alternating voltages in every two adjacent voltage adjustment phases may be the same. For example, an absolute value of a voltage difference between the first target alternating voltage and the second target alternating voltage is the same as an absolute value of a voltage difference between the second target alternating voltage and the third target alternating voltage. The absolute value of the voltage difference between the second target alternating voltage and the third target alternating voltage is the same as an absolute value of a voltage difference between the third target alternating voltage and the fourth target alternating voltage. The absolute value of the voltage difference between the third target alternating voltage and the fourth target alternating voltage is the same as an absolute value of a voltage difference between the fourth target alternating voltage and the fifth target alternating voltage. The absolute value of the voltage difference between the fourth target alternating voltage and the fifth target alternating voltage is the same as an absolute value of a voltage difference between the fifth target alternating voltage and the sixth target alternating voltage. The rest may be deduced by analogy, and details are not described herein again.

For example, voltage differences between target alternating voltages in every two adjacent voltage adjustment phases may alternatively be the same. For example, the absolute value of the voltage difference between the first target alternating voltage and the second target alternating voltage, the absolute value of the voltage difference between the second target alternating voltage and the third target alternating voltage, and the absolute value of the voltage difference between the third target alternating voltage and the fourth target alternating voltage, the absolute value of the voltage difference between the fourth target alternating voltage and the fifth target alternating voltage, the absolute value of the voltage difference between the fifth target alternating voltage and the sixth target alternating voltage are the same. The rest may be deduced by analogy, and details are not described herein again.

In other examples, in the first voltage adjustment phase to the N^{th} voltage adjustment phase, voltage differences between target alternating voltages in every two adjacent voltage adjustment phases sequentially increase. For example, in the first voltage adjustment phase to the N^{th} voltage adjustment phase, absolute values of voltage differences between target alternating voltages in every two adjacent voltage adjustment phases sequentially increase. For example, an absolute value of a voltage difference between the first target alternating voltage and the second target alternating voltage is less than an absolute value of a voltage difference between the second target alternating voltage and the third target alternating voltage. The absolute value of the voltage difference between the second target alternating voltage and the third target alternating voltage is less than an absolute value of a voltage difference between the third target alternating voltage and the fourth target alternating voltage. The absolute value of the voltage difference between the third target alternating voltage and the fourth target alternating voltage is less than an absolute value of a voltage difference between the fourth target alternating voltage and the fifth target alternating voltage. An absolute value of a voltage difference between the fifth target alternating voltage and the sixth target alternating voltage is less than an absolute value of a voltage difference between the sixth target alternating voltage and the seventh target alternating voltage. The rest may be deduced by analogy, and details are not described herein again.

In still other examples, in the first voltage adjustment phase to the N^{th} voltage adjustment phase, voltage differences between target alternating voltages in every two adjacent voltage adjustment phases sequentially decrease. For example, in the first voltage adjustment phase to the N^{th} voltage adjustment phase, absolute values of voltage differences between target alternating voltages in every two adjacent voltage adjustment phases sequentially decrease. For example, an absolute value of a voltage difference between the first target alternating voltage and the second target alternating voltage is greater than an absolute value of a voltage difference between the second target alternating voltage and the third target alternating voltage. The absolute value of the voltage difference between the second target alternating voltage and the third target alternating voltage is greater than an absolute value of a voltage difference between the third target alternating voltage and the fourth target alternating voltage. The absolute value of the voltage difference between the third target alternating voltage and the fourth target alternating voltage is greater than an absolute value of a voltage difference between the fourth target alternating voltage and the fifth target alternating voltage. An absolute value of a voltage difference between the fifth target alternating voltage and the sixth target alternating voltage is greater than an absolute value of a voltage difference between the sixth target alternating voltage and the seventh target alternating voltage. The rest may be deduced by analogy, and details are not described herein again.

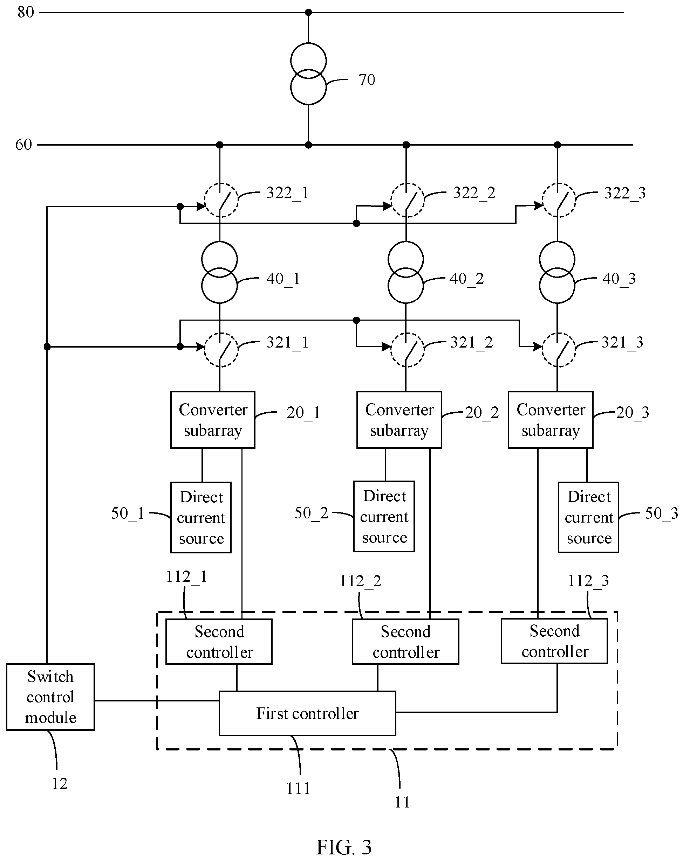

FIG. 3 is a schematic diagram of a structure of a black start controller in a power system according to an embodiment of this application. In this embodiment of this application, the black start controller 11 includes a first controller 111. The first controller 111 is used as an upper-layer controller, or referred to as a station or power station controller, or a micro grid controller, and can control all converter subarrays to implement corresponding control functions.

The first controller provided in this application may be a primary controller. In addition, a working principle and a specific implementation of the primary controller are the same as the principle and the implementation of the first controller in this application. Therefore, for an implementation of the primary controller, refer to the specific implementation of the first controller in this application. Details are not described herein again.

The power system may further have a monitor system. The monitor system may monitor an active power, a reactive power, a voltage, a current, a frequency, and the like of a converter subarray. The first controller 111 may be communicatively connected to the monitor system, and obtain information such as an active power, a reactive power, a voltage, a current, and a frequency of a converter subarray from the monitor system.

As shown in FIG. 3, in this embodiment of this application, the controller further includes second controllers 112_1 to 112_3. The first controller 111 is communicatively connected to the second controllers 112_1 to 112_3. For example, the second controller 112_1 and the converter subarray 20_1 are disposed in correspondence, and the second controller 112_1 is communicatively connected to a drive controller in a converter in the converter subarray 20_1. In addition, the second controller 112_2 and the converter subarray 20_2 are disposed in correspondence, and the second controller 112_2 is communicatively connected to a drive controller in a converter in the converter subarray 20_2. In addition, the second controller 112_3 and the converter subarray 20_3 are disposed in correspondence, and the second controller 112_3 is communicatively connected to a drive controller in a converter in the converter subarray 20_3.

For example, the second controller 112_1 and the converter subarray 20_1 may be disposed in a same area. For example, the second controller 112_1 is disposed in an operation area in which the converter subarray 20_1 is located. The second controller 112_2 and the converter subarray 20_2 may be disposed in a same area. For example, the second controller 112_2 is disposed in an operation area in which the converter subarray 20_2 is located. The second controller 112_3 and the converter subarray 20_3 may be disposed in a same area. For example, the second controller 112_3 is disposed in an operation area in which the converter subarray 20_3 is located.

For example, an uninterrupted power supply (Uninterrupted Power Supply, UPS) is further disposed in the power system, and the UPS is separately connected to the switch control module and the second controller, and is configured to store electric energy transmitted on a power grid before the power grid or an electric device is powered off, and provide the stored electric energy to the switch control module and the second controller when the power grid or the electric device is powered off, to implement a black start. In actual use, the power system further includes a power module bridged between the UPS and the switch control module and the second controller, and the UPS may supply power to the switch control module and the second controller by using the power module.

For example, the first controller 111, the second controller 112_1 to 112_3, the drive controller, and the switch control module each may have a communication component for communicating with an external device or an external server. The communication component may include network communication protocol modules such as a Wi-Fi module and a wired Ethernet communication protocol module, so that the first controller 111 can implement communication of a control signal and a data signal with the external device or the external server.

Optionally, the communication component of the first controller 111 is communicatively connected to the communication component of each of the second controllers 112_1 to 112_3 and the switch control module, so that the first controller 111 implements communication of a control signal and a data signal with each of the second controllers 112_1 to 112_3 and the switch control module. The communication components of the second controllers 112_1 to 112_3 are communicatively connected to the communication component of the drive controller, so that the second controllers 112_1 to 112_3 implement communication of a control signal and a data signal with the drive controller.

In some examples, when black start control needs to be performed, a staff inputs a black start enabling instruction to the first controller 111. After receiving the black start enabling instruction, the first controller 111 selects the converter subarrays 20_1 to 20_3 participating in a black start, and determines that the selected converter subarrays 20_1 to 20_3 are powered on or available. Then, the first controller 111 sends an initial black start preparation instruction to the second controllers 112_1 to 112_3, and the second controllers 112_1 to 112_3 send a target black start preparation instruction to a drive controller in a converter in the converter subarrays 20_1 to 20_3 based on the received initial black start preparation instruction. If the drive controller in the converter in the converter subarrays 20_1 to 20_3 completes preparation, the drive controller sends an initial black start preparation completion instruction to the second controllers 112_1 to 112_3. The second controllers 112_1 to 112_3 send a target black start preparation completion instruction to the first controller 111 based on the initial black start preparation completion instruction. After receiving the target black start preparation complete instruction, the first controller 111 may start to sequentially perform working processes of the first voltage adjustment phase to the N^{th} voltage adjustment phase.

In other examples, a staff may alternatively input a black start enabling instruction to the first controller 111 by using an upper-level controller. After receiving the black start enabling instruction, the first controller 111 selects the converter subarrays 20_1 to 20_3 participating in a black start, and determines that the selected converter subarrays 20_1 to 20_3 are powered on or available. Then, the first controller 111 sends an initial black start preparation instruction to the second controllers 112_1 to 112_3, and the second controllers 112_1 to 112_3 send a target black start preparation instruction to a drive controller in a converter in the converter subarrays 20_1 to 20_3 based on the received initial black start preparation instruction. If the drive controller in the converter in the converter subarrays 20_1 to 20_3 completes preparation, the drive controller sends an initial black start preparation completion instruction to the second controllers 112_1 to 112_3. The second controllers 112_1 to 112_3 send a target black start preparation completion instruction to the first controller 111 based on the initial black start preparation completion instruction. After receiving the target black start preparation complete instruction, the first controller 111 may start to sequentially perform working processes of the first voltage adjustment phase to the N^{th} voltage adjustment phase. For example, the second controller may be further configured to monitor operating status information in the corresponding converter subarray, for example, a voltage, a current, a frequency, and a power (active power and reactive power) of a converter in the converter subarray. The first controller 111 may obtain the information such as the voltage, the current, the frequency, and the power (active power and reactive power) of the converter subarray from the second controller.

As shown in FIG. 3, the first controller 111 stores a pre-established adjustment sequence. The adjustment sequence has a first piece of target alternating voltage data to an N^{th} piece of target alternating voltage data that are sequentially arranged. For example, the adjustment sequence may be {U₁, U₂, U₃, ..., U_{N}}. U₁ represents the first piece of target alternating voltage data, U₂ represents the second piece of target alternating voltage data, U₃ represents the third piece of target alternating voltage data, ..., and U_{N} represents the N^{th} piece of target alternating voltage data.

In some examples, N=4, and the adjustment sequence may be {U₁, U₂, U₃, U₄}. Assuming that U₁=0.25U₄, U₂=0.5U₄, and U₃=0.75U₄, the adjustment sequence may also be {0.25U₄, 0.5U₄, 0.75U₄, U₄}. In addition, 0.25U₄ is used to correspondingly establish the first target alternating voltage V₁, 0.5U₄ is used to correspondingly establish the second target alternating voltage V₂, 0.75U₄ is used to correspondingly establish the third target alternating voltage V₃, U₄ is used to correspondingly establish the fourth target alternating voltage V₄, V₁=0.25V₄, V₂=0.5V₄, and V₃=0.75V₄. In addition, the fourth target alternating voltage V₄ correspondingly outputs the fourth target bus alternating voltage to the first alternating current bus 60 as the rated voltage of the first alternating current bus 60.

In other examples, N=4, and the adjustment sequence may be {U₁, U₂, U₃, U₄}. Assuming that U₁=0.4U₄, U₂=0.6U₄, and U₃=0.8U₄, the adjustment sequence may also be {0.4U₄, Dp1, 0.6U₄, 0.8U₄, Dp2, U₄, Dp3}. In addition, 0.4U₄ is used to correspondingly establish the first target alternating voltage V₁, 0.6U₄ is used to correspondingly establish the second target alternating voltage V₂, 0.8U₄ is used to correspondingly establish the third target alternating voltage V₃, U₄ is used to correspondingly establish the fourth target alternating voltage V₄, V₁=0.4V₄, V₂=0.6V₄, and V₃=0.8V₄. In addition, the fourth target alternating voltage V₄ correspondingly outputs the fourth target bus alternating voltage to the first alternating current bus 60 as the rated voltage of the first alternating current bus 60.

A manner of storing the first piece of target alternating voltage data to the N^{th} piece of target alternating voltage data is not limited in this application. For example, the first piece of target alternating voltage data to the N^{th} piece of target alternating voltage data may be stored in the first controller 111 in a binary, decimal, or hexadecimal manner.

As shown in FIG. 2 and FIG. 3, in this application, the first controller 111 is configured to synchronously send the first target voltage adjustment instruction to the second controllers 112_1 to 112_3 based on the first piece of target alternating voltage data (for example, 0.4U₄) in the pre-established adjustment sequence in the first voltage adjustment phase. In this case, the second controllers 112_1 to 112_3 may synchronously receive the first target voltage adjustment instruction. The second controller 112_1 is configured to send a first voltage output instruction to a communicatively connected drive controller in the converter subarray 20_1 based on the received first target voltage adjustment instruction. The drive controller in the converter subarray 20_1 is configured to control, based on the received first voltage output instruction, a converter in the converter subarray 20_1 to convert electric energy of the direct current source 50_1 into the first target alternating voltage of a power frequency alternating current, to establish the first target alternating voltage V₁. In addition, the second controller 112_2 is configured to send a first voltage output instruction to a communicatively connected drive controller in the converter subarray 20_2 based on the received first target voltage adjustment instruction. The drive controller in the converter subarray 20_2 is configured to control, based on the received first voltage output instruction, a converter in the converter subarray 20_2 to convert electric energy of the direct current source 50_2 into the first target alternating voltage of the power frequency alternating current, to establish the first target alternating voltage V₁. In addition, the second controller 112_3 is configured to send a first voltage output instruction to a communicatively connected drive controller in the converter subarray 20_3 based on the received first target voltage adjustment instruction. The drive controller in the converter subarray 20_3 is configured to control, based on the received first voltage output instruction, a converter in the converter subarray 20_3 to convert electric energy of the direct current source 50_3 into the first target alternating voltage of the power frequency alternating current, to establish the first target alternating voltage V₁.

The first controller 111 is configured to synchronously send the second target voltage adjustment instruction to the second controllers 112_1 to 112_3 based on the second piece of target alternating voltage data (for example, 0.6U₄) in the pre-established adjustment sequence in the second voltage adjustment phase. In this case, the second controllers 112_1 to 112_3 may synchronously receive the second target voltage adjustment instruction. The second controller 112_1 is configured to send a second voltage output instruction to a communicatively connected drive controller in the converter subarray 20_1 based on the received second target voltage adjustment instruction. The drive controller in the converter subarray 20_1 is configured to control, based on the received second voltage output instruction, a converter in the converter subarray 20_1 to convert electric energy of the direct current source 50_1 into the second target alternating voltage of the power frequency alternating current, to establish the second target alternating voltage V₂. In addition, the second controller 112_2 is configured to send a second voltage output instruction to a communicatively connected drive controller in the converter subarray 20_2 based on the received second target voltage adjustment instruction. The drive controller in the converter subarray 20_2 is configured to control, based on the received second voltage output instruction, a converter in the converter subarray 20_2 to convert electric energy of the direct current source 50_2 into the second target alternating voltage of the power frequency alternating current, to establish the second target alternating voltage V₂. In addition, the second controller 112_3 is configured to send a second voltage output instruction to a communicatively connected drive controller in the converter subarray 20_3 based on the received second target voltage adjustment instruction. The drive controller in the converter subarray 20_3 is configured to control, based on the received second voltage output instruction, a converter in the converter subarray 20_3 to convert electric energy of the direct current source 50_3 into the second target alternating voltage of the power frequency alternating current, to establish the second target alternating voltage V₂.

The first controller 111 is configured to synchronously send the third target voltage adjustment instruction to the second controllers 112_1 to 112_3 based on the third piece of target alternating voltage data (for example, 0.8U₄) in the pre-established adjustment sequence in the third voltage adjustment phase. In this case, the second controllers 112_1 to 112_3 may synchronously receive the third target voltage adjustment instruction. The second controller 112_1 is configured to send a third voltage output instruction to a communicatively connected drive controller in the converter subarray 20_1 based on the received third target voltage adjustment instruction. The drive controller in the converter subarray 20_1 is configured to control, based on the received third voltage output instruction, a converter in the converter subarray 20_1 to convert electric energy of the direct current source 50_1 into the third target alternating voltage of the power frequency alternating current, to establish the third target alternating voltage V₃. In addition, the second controller 112_2 is configured to send a third voltage output instruction to a communicatively connected drive controller in the converter subarray 20_2 based on the received third target voltage adjustment instruction. The drive controller in the converter subarray 20_2 is configured to control, based on the received third voltage output instruction, a converter in the converter subarray 20_2 to convert electric energy of the direct current source 50_2 into the third target alternating voltage of the power frequency alternating current, to establish the third target alternating voltage V₃. In addition, the second controller 112_3 is configured to send a third voltage output instruction to a communicatively connected drive controller in the converter subarray 20_3 based on the received third target voltage adjustment instruction. The drive controller in the converter subarray 20_3 is configured to control, based on the received third voltage output instruction, a converter in the converter subarray 20_3 to convert electric energy of the direct current source 50_3 into the third target alternating voltage of the power frequency alternating current, to establish the third target alternating voltage V₃.

The first controller 111 is configured to synchronously send the fourth target voltage adjustment instruction to the second controllers 112_1 to 112_3 based on the fourth piece of target alternating voltage data (for example, U₄) in the pre-established adjustment sequence in the fourth voltage adjustment phase. In this case, the second controllers 112_1 to 112_3 may synchronously receive the fourth target voltage adjustment instruction. The second controller 112_1 is configured to send a fourth voltage output instruction to a communicatively connected drive controller in the converter subarray 20_1 based on the received fourth target voltage adjustment instruction. The drive controller in the converter subarray 20_1 is configured to control, based on the received fourth voltage output instruction, a converter in the converter subarray 20_1 to convert electric energy of the direct current source 50_1 into the fourth target alternating voltage of the power frequency alternating current, to establish the fourth target alternating voltage V₄. In addition, the second controller 112_2 is configured to send a fourth voltage output instruction to a communicatively connected drive controller in the converter subarray 20_2 based on the received fourth target voltage adjustment instruction. The drive controller in the converter subarray 20_2 is configured to control, based on the received fourth voltage output instruction, a converter in the converter subarray 20_2 to convert electric energy of the direct current source 50_2 into the fourth target alternating voltage of the power frequency alternating current, to establish the fourth target alternating voltage V₄. In addition, the second controller 112_3 is configured to send a fourth voltage output instruction to a communicatively connected drive controller in the converter subarray 20_3 based on the received fourth target voltage adjustment instruction. The drive controller in the converter subarray 20_3 is configured to control, based on the received fourth voltage output instruction, a converter in the converter subarray 20_3 to convert electric energy of the direct current source 50_3 into the fourth target alternating voltage of the power frequency alternating current, to establish the fourth target alternating voltage V₄.

In some examples, each converter in each converter subarray is disposed as a voltage source converter.

For example, each converter in the converter subarray 20_1 is disposed as a voltage source converter. In addition, the second controller 112_1 is configured to synchronously send the first voltage output instruction to the drive controller in each converter in the converter subarray 20_1, so that the drive controller in each converter in the converter subarray 20_1 controls a switching frequency of a switch in the corresponding converter based on the received first voltage output instruction, to convert electric energy of the direct current source 50_1 into the first target alternating voltage of the power frequency alternating current, and establish the first target alternating voltage V₁. A process in which the second controller 112_1 controls establishment of other target alternating voltages may be deduced by analogy. Details are not described herein again.

For example, each converter in the converter subarray 20_2 is disposed as a voltage source converter. In addition, the second controller 112_2 is configured to synchronously send the first voltage output instruction to the drive controller in each converter in the converter subarray 20_2, so that the drive controller in each converter in the converter subarray 20_2 controls a switching frequency of a switch in the corresponding converter based on the received first voltage output instruction, to convert electric energy of the direct current source 50_2 into the first target alternating voltage of the power frequency alternating current, and establish the first target alternating voltage V₁. A process in which the second controller 112_2 controls establishment of other target alternating voltages may be deduced by analogy. Details are not described herein again.

For example, each converter in the converter subarray 20_3 is disposed as a voltage source converter. In addition, the second controller 112_3 is configured to synchronously send the first voltage output instruction to the drive controller in each converter in the converter subarray 20_3, so that the drive controller in each converter in the converter subarray 20_3 controls a switching frequency of a switch in the corresponding converter based on the received first voltage output instruction, to convert electric energy of the direct current source 50_3 into the first target alternating voltage of the power frequency alternating current, and establish the first target alternating voltage V₁. A process in which the second controller 112_3 controls establishment of other target alternating voltages may be deduced by analogy. Details are not described herein again.

In this embodiment of this application, the drive controller in each converter of each converter subarray is further configured to: after controlling a corresponding converter to establish an n^{th} target alternating voltage, control the corresponding converter to correct a phase of the established n^{th} target alternating voltage based on an alternating voltage of an output port of a converter subarray in which the converter is located. For example, the drive controller is further configured to: after controlling a corresponding converter to establish the first target alternating voltage V₁, control the corresponding converter to correct a phase of the established first target alternating voltage V₁ based on an alternating voltage of an output port of a converter subarray in which the converter is located. The rest may be deduced by analogy, and details are not described herein again.

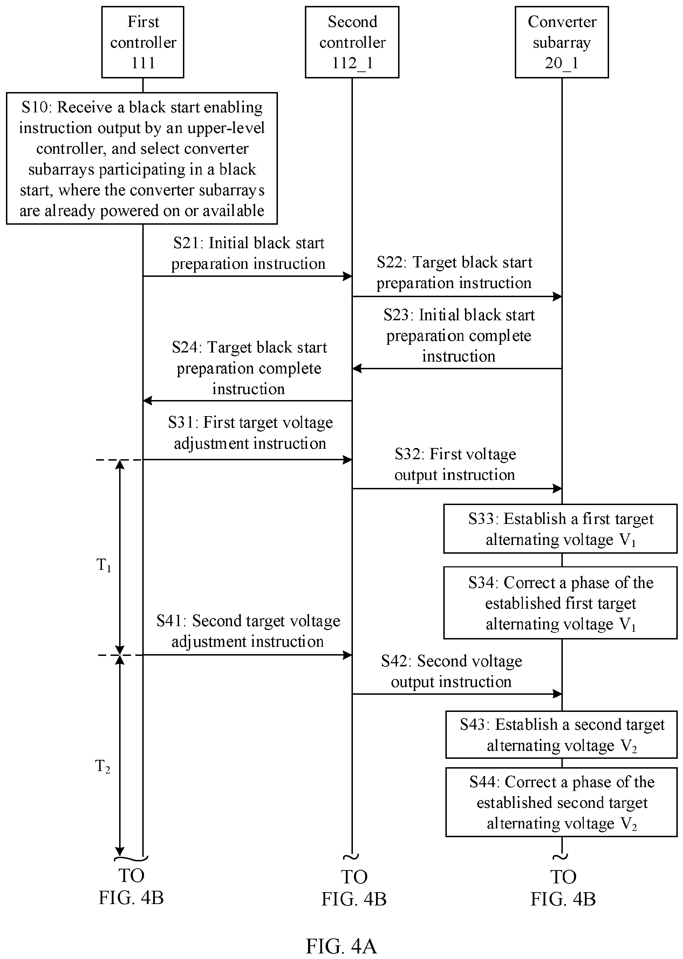

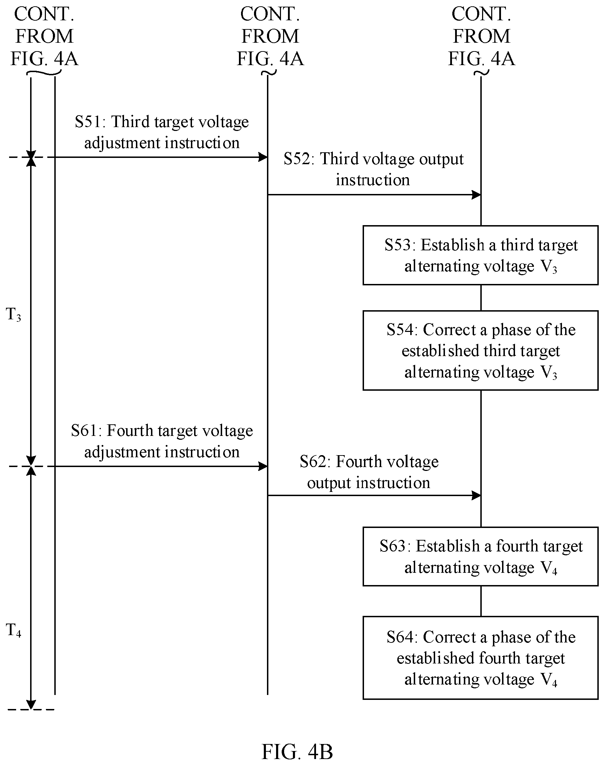

FIG. 4A and FIG. 4B are an interaction diagram of a specific embodiment of a black start control method according to an embodiment of the present invention. In FIG. 4A and FIG. 4B, the second controller 112_1 and the converter subarray 20_1 are used as an example for illustration.

As shown in FIG. 3 and FIG. 4A and FIG. 4B, the black start control method provided in this embodiment of this application may include the following steps.

S10: A staff may input a black start enabling instruction to the first controller 111 by using an upper-level controller, and the first controller 111 may receive the black start enabling instruction output by the upper-level controller, and after receiving the black start enabling instruction output by the upper-level controller, may select converter subarrays participating in a black start. For example, the selected converter subarrays participating in the black start are 20_1 to 20_3. The first controller 111 sends IDs of the selected converter subarrays 20_1 to 20_3 participating in the black start to the switch control module 12. The switch control module 12 controls the control switches 321_1 to 322_3 connected to the converter subarrays 20_1 to 20_3 to be turned on, to connects, on a circuit, converters in the converter subarrays 20_1 to 20_3 and an alternating current power grid that needs to be started and run. Then, the first controller 111 synchronously sends a subarray start instruction to the second controllers 112_1 to 112_3 corresponding to the converter subarrays 20_1 to 20_3.

The second controller 112_1 sends a converter power-on instruction to a drive controller in each converter in the converter subarray 20_1 based on the received subarray start instruction. The drive controller in each converter in the converter subarray 20_1 controls, based on the received converter power-on instruction, the converter to be powered on, so that each converter in the converter subarray 20_1 is already powered on or available before the black start is implemented.

In addition, the second controller 112_2 sends a converter power-on instruction to a drive controller in each converter in the converter subarray 20_2 based on the received subarray start instruction. The drive controller in each converter in the converter subarray 20_2 controls, based on the received converter power-on instruction, the converter to be powered on, so that each converter in the converter subarray 20_2 is already powered on or available before the black start is implemented.

In addition, the second controller 112_3 sends a converter power-on instruction to a drive controller in each converter in the converter subarray 20_3 based on the received subarray start instruction. The drive controller in each converter in the converter subarray 20_3 controls, based on the received converter power-on instruction, the converter to be powered on, so that each converter in the converter subarray 20_3 is already powered on or available before the black start is implemented.

S21: The first controller 111 sends an initial black start preparation instruction to the second controllers 112_1 to 112_3.

S22: The second controllers 112_1 to 112_3 send a target black start preparation instruction to a drive controller in a converter in the converter subarrays 20_1 to 20_3 based on the received initial black start preparation instruction.

S23: If the drive controller in the converter in the converter subarrays 20_1 to 20_3 completes preparation, the drive controller sends an initial black start preparation completion instruction to the second controllers 112_1 to 112_3.

S24: The second controllers 112_1 to 112_3 send a target black start preparation completion instruction to the first controller 111 based on the initial black start preparation completion instruction. After receiving the target black start preparation complete instruction, the first controller 111 may start to sequentially perform working processes of a first voltage adjustment phase to an N^{th} voltage adjustment phase.

S31: The first controller 111 synchronously sends a first target voltage adjustment instruction to the second controllers 112_1 to 112_3 based on a first piece of target alternating voltage data (for example, 0.4U₄) in a pre-established adjustment sequence in the first voltage adjustment phase. In this case, the second controllers 112_1 to 112_3 may synchronously receive the first target voltage adjustment instruction.

S32: The second controller 112_1 synchronously sends a first voltage output instruction to the drive controller in each converter in the converter subarray 20_1 based on the received first target voltage adjustment instruction.

In addition, the second controller 112_2 synchronously sends a first voltage output instruction to the drive controller in each converter in the converter subarray 20_2 based on the received first target voltage adjustment instruction.

In addition, the second controller 112_3 synchronously sends a first voltage output instruction to the drive controller in each converter in the converter subarray 20_3 based on the received first target voltage adjustment instruction.

S33: The drive controller in each converter in the converter subarray 20_1 controls a switching frequency of a switch in the corresponding converter based on the received first voltage output instruction to convert electric energy of the direct current source 50_1 into a first target alternating voltage V₁ of a power frequency alternating current, to establish the first target alternating voltage V₁. The first target alternating voltage V₁ is converted by the first transformer 40_1 into a first target bus alternating voltage output to the first alternating current bus 60.

In addition, the drive controller in each converter in the converter subarray 20_2 controls a switching frequency of a switch in the corresponding converter based on the received first voltage output instruction to convert electric energy of the direct current source 50_2 into a first target alternating voltage V₁ of the power frequency alternating current, to establish the first target alternating voltage V₁. The first target alternating voltage V₁ is converted by the first transformer 40_2 into a first target bus alternating voltage output to the first alternating current bus 60.

In addition, the drive controller in each converter in the converter subarray 20_3 controls a switching frequency of a switch in the corresponding converter based on the received first voltage output instruction to convert electric energy of the direct current source 50_3 into a first target alternating voltage V₁ of the power frequency alternating current, to establish the first target alternating voltage V₁. The first target alternating voltage V₁ is converted by the first transformer 40_3 into a first target bus alternating voltage output to the first alternating current bus 60.

S34: The drive controller in each converter in the converter subarray 20_1 controls the corresponding converter to correct a phase of the established first target alternating voltage V₁ based on an alternating voltage of an output port of the converter subarray in which the corresponding converter is located.

In addition, the drive controller in each converter in the converter subarray 20_2 controls the corresponding converter to correct a phase of the established first target alternating voltage V₁ based on an alternating voltage of an output port of the converter subarray in which the corresponding converter is located.

In addition, the drive controller in each converter in the converter subarray 20_3 controls the corresponding converter to correct a phase of the established first target alternating voltage V₁ based on an alternating voltage of an output port of the converter subarray in which the corresponding converter is located.

S41: The first controller 111 synchronously sends a second target voltage adjustment instruction to the second controllers 112_1 to 112_3 based on a second piece of target alternating voltage data (for example, 0.6U₄) in the pre-established adjustment sequence in the second voltage adjustment phase. In this case, the second controllers 112_1 to 112_3 may synchronously receive the second target voltage adjustment instruction.

S42: The second controller 112_1 synchronously sends a second voltage output instruction to the drive controller in each converter in the converter subarray 20_1 based on the received second target voltage adjustment instruction.

In addition, the second controller 112_2 synchronously sends a second voltage output instruction to the drive controller in each converter in the converter subarray 20_2 based on the received second target voltage adjustment instruction.

In addition, the second controller 112_3 synchronously sends a second voltage output instruction to the drive controller in each converter in the converter subarray 20_3 based on the received second target voltage adjustment instruction.

S43: The drive controller in each converter in the converter subarray 20_1 controls a switching frequency of a switch in the corresponding converter based on the received second voltage output instruction to convert electric energy of the direct current source 50_1 into a second target alternating voltage V₂ of the power frequency alternating current, to establish the second target alternating voltage V₂. The second target alternating voltage V₂ is converted by the first transformer 40_1 into a second target bus alternating voltage output to the first alternating current bus 60.

In addition, the drive controller in each converter in the converter subarray 20_2 controls a switching frequency of a switch in the corresponding converter based on the received second voltage output instruction to convert electric energy of the direct current source 50_2 into a second target alternating voltage V₂ of the power frequency alternating current, to establish the second target alternating voltage V₂. The second target alternating voltage V₂ is converted by the first transformer 40_2 into a second target bus alternating voltage output to the first alternating current bus 60.

In addition, the drive controller in each converter in the converter subarray 20_3 controls a switching frequency of a switch in the corresponding converter based on the received second voltage output instruction to convert electric energy of the direct current source 50_3 into a second target alternating voltage V₂ of the power frequency alternating current, to establish the second target alternating voltage V₂. The second target alternating voltage V₂ is converted by the first transformer 40_3 into a second target bus alternating voltage output to the first alternating current bus 60.

S44: The drive controller in each converter in the converter subarray 20_1 controls the corresponding converter to correct a phase of the established second target alternating voltage V₂ based on an alternating voltage of an output port of the converter subarray in which the corresponding converter is located.

In addition, the drive controller in each converter in the converter subarray 20_2 controls the corresponding converter to correct a phase of the established second target alternating voltage V₂ based on an alternating voltage of an output port of the converter subarray in which the corresponding converter is located.

In addition, the drive controller in each converter in the converter subarray 20_3 controls the corresponding converter to correct a phase of the established second target alternating voltage V₂ based on an alternating voltage of an output port of the converter subarray in which the corresponding converter is located.

S51: The first controller 111 synchronously sends a third target voltage adjustment instruction to the second controllers 112_1 to 112_3 based on a third piece of target alternating voltage data (for example, 0.8U₄) in the pre-established adjustment sequence in the third voltage adjustment phase. In this case, the second controllers 112_1 to 112_3 may synchronously receive the third target voltage adjustment instruction.

S52: The second controller 112_1 synchronously sends a third voltage output instruction to the drive controller in each converter in the converter subarray 20_1 based on the received third target voltage adjustment instruction.

In addition, the second controller 112_2 synchronously sends a third voltage output instruction to the drive controller in each converter in the converter subarray 20_2 based on the received third target voltage adjustment instruction.

In addition, the second controller 112_3 synchronously sends a third voltage output instruction to the drive controller in each converter in the converter subarray 20_3 based on the received third target voltage adjustment instruction.

S53: The drive controller in each converter in the converter subarray 20_1 controls a switching frequency of a switch in the corresponding converter based on the received third voltage output instruction to convert electric energy of the direct current source 50_1 into a third target alternating voltage V₃ of the power frequency alternating current, to establish the third target alternating voltage V₃. The third target alternating voltage V₃ is converted by the first transformer 40_1 into a third target bus alternating voltage output to the first alternating current bus 60.

In addition, the drive controller in each converter in the converter subarray 20_2 controls a switching frequency of a switch in the corresponding converter based on the received third voltage output instruction to convert electric energy of the direct current source 50_2 into a third target alternating voltage V₃ of the power frequency alternating current, to establish the third target alternating voltage V₃. The third target alternating voltage V₃ is converted by the first transformer 40_2 into a third target bus alternating voltage output to the first alternating current bus 60.

In addition, the drive controller in each converter in the converter subarray 20_3 controls a switching frequency of a switch in the corresponding converter based on the received third voltage output instruction to convert electric energy of the direct current source 50_3 into a third target alternating voltage V₃ of the power frequency alternating current, to establish the third target alternating voltage V₃. The third target alternating voltage V₃ is converted by the first transformer 40_3 into a third target bus alternating voltage output to the first alternating current bus 60.

S54: The drive controller in each converter in the converter subarray 20_1 controls the corresponding converter to correct a phase of the established third target alternating voltage V₃ based on an alternating voltage of an output port of the converter subarray in which the corresponding converter is located.

In addition, the drive controller in each converter in the converter subarray 20_2 controls the corresponding converter to correct a phase of the established third target alternating voltage V₃ based on an alternating voltage of an output port of the converter subarray in which the corresponding converter is located.

In addition, the drive controller in each converter in the converter subarray 20_3 controls the corresponding converter to correct a phase of the established third target alternating voltage V₃ based on an alternating voltage of an output port of the converter subarray in which the corresponding converter is located.

S61: The first controller 111 synchronously sends a fourth target voltage adjustment instruction to the second controllers 112_1 to 112_3 based on a fourth piece of target alternating voltage data (for example, U₄) in the pre-established adjustment sequence in the fourth voltage adjustment phase. In this case, the second controllers 112_1 to 112_3 may synchronously receive the fourth target voltage adjustment instruction.

S62: The second controller 112_1 synchronously sends a fourth voltage output instruction to the drive controller in each converter in the converter subarray 20_1 based on the received fourth target voltage adjustment instruction.

In addition, the second controller 112_2 synchronously sends a fourth voltage output instruction to the drive controller in each converter in the converter subarray 20_2 based on the received fourth target voltage adjustment instruction.

In addition, the second controller 112_3 synchronously sends a fourth voltage output instruction to the drive controller in each converter in the converter subarray 20_3 based on the received fourth target voltage adjustment instruction.

S63: The drive controller in each converter in the converter subarray 20_1 controls a switching frequency of a switch in the corresponding converter based on the received fourth voltage output instruction to convert electric energy of the direct current source 50_1 into a fourth target alternating voltage V₄ of the power frequency alternating current, to establish the fourth target alternating voltage V₄. The fourth target alternating voltage V₄ is converted by the first transformer 40_1 into a fourth target bus alternating voltage output to the first alternating current bus 60.

In addition, the drive controller in each converter in the converter subarray 20_2 controls a switching frequency of a switch in the corresponding converter based on the received fourth voltage output instruction to convert electric energy of the direct current source 50_2 into a fourth target alternating voltage V₄ of the power frequency alternating current, to establish the fourth target alternating voltage V₄. The fourth target alternating voltage V₄ is converted by the first transformer 40_2 into a fourth target bus alternating voltage output to the first alternating current bus 60.

In addition, the drive controller in each converter in the converter subarray 20_3 controls a switching frequency of a switch in the corresponding converter based on the received fourth voltage output instruction to convert electric energy of the direct current source 50_3 into a fourth target alternating voltage V₄ of the power frequency alternating current, to establish the fourth target alternating voltage V₄. The fourth target alternating voltage V₄ is converted by the first transformer 40_3 into a fourth target bus alternating voltage output to the first alternating current bus 60.

S64: The drive controller in each converter in the converter subarray 20_1 controls the corresponding converter to correct a phase of the established fourth target alternating voltage V₄ based on an alternating voltage of an output port of the converter subarray in which the corresponding converter is located.

In addition, the drive controller in each converter in the converter subarray 20_2 controls the corresponding converter to correct a phase of the established fourth target alternating voltage V₄ based on an alternating voltage of an output port of the converter subarray in which the corresponding converter is located.

In addition, the drive controller in each converter in the converter subarray 20_3 controls the corresponding converter to correct a phase of the established fourth target alternating voltage V₄ based on an alternating voltage of an output port of the converter subarray in which the corresponding converter is located.

In other embodiments of this application, the implementations in the foregoing embodiment are modified. The following describes only differences between this embodiment and the foregoing embodiments, and similarities are not described herein again.

In this embodiment, the adjustment sequence further includes one or more pieces of power equalization control data. In addition, in the adjustment sequence, the n^{th} piece of target alternating voltage data corresponds to and adjacent to a q^{th} piece of power equalization control data, and the n^{th} piece of target alternating voltage data is set before the q^{th} piece of power equalization control data. For example, the adjustment sequence includes a plurality of pieces of power equalization control data. If the adjustment sequence includes Q pieces of power equalization control data, the adjustment sequence includes a first piece of power equalization control data to a Q^{th} piece of power equalization control data. Q is an integer greater than 1, q is a positive integer, and 1≤q≤Q.

In some examples, in the adjustment sequence, a quantity of pieces of the power equalization control data is the same as a quantity of pieces of the target alternating voltage data. In addition, in the adjustment sequence, the target alternating voltage data and the power equalization control data are alternately arranged. In other words, Q=N. The adjustment sequence includes the first piece of target alternating voltage data, the first piece of power equalization control data, the second piece of target alternating voltage data, the second piece of power equalization control data, the third piece of target alternating voltage data, the third piece of power equalization control data, ..., the N^{th} piece of target alternating voltage data, and the Q^{th} piece of power equalization control data.

For example, the adjustment sequence may be {U₁, Dp₁, U₂, Dp₂, U₃, Dp₃, ..., U_{N}, Dp_{Q}}. Dp₁ represents the first piece of power equalization control data, Dp₂ represents the second piece of power equalization control data, Dp₃ represents the third piece of power equalization control data, ..., and Dp_{Q} represents the Q^{th} piece of power equalization control data.

For example, N=4, and the adjustment sequence may be {U₁, Dp₁, U₂, Dp₂, U₃, Dp₃, U₄, Dp₄}. Assuming that U₁=0.25U₄, U₂=0.5U₄, and U₃=0.75U₄, the adjustment sequence may also be {0.25U₄, Dp₁, 0.5U₄, Dp₂, 0.75U₄, Dp₃, U₄, Dp₄}.

For example, N=4, and the adjustment sequence may be {U₁, Dp₁, U₂, Dp₂, U₃, Dp₃, U₄, Dp₄}. Assuming that U₁=0.4U₄, U₂=0.6U₄, and U₃=0.8U₄, the adjustment sequence may also be {0.4U₄, Dp₁, 0.6U₄, Dp₂, 0.6U₄, Dp₃, U₄, Dp₄}.

In other examples, in the adjustment sequence, a quantity of pieces of the power equalization control data is less than a quantity of pieces of the target alternating voltage data. In addition, in the adjustment sequence, at least one piece of target alternating voltage data is set between two adjacent pieces of power equalization control data. In other words, Q<N. In the adjustment sequence, no power equalization control data may be set between some of the target alternating voltage data.

For example, the adjustment sequence may be {U₁, Dp₁, U₂, U₃, Dp₂, U₄, U₅, U₆, Dp₃, U₇, ..., U_{N}, Dp_{N}}. Dp₁ represents the first piece of power equalization control data, Dp₂ represents the second piece of power equalization control data, Dp₃ represents the third piece of power equalization control data, ..., and Dp_{Q} represents the Q^{th} piece of power equalization control data.

For example, N=4, and the adjustment sequence may be {U₁, Dp₁, U₂, U₃, Dp₂, U₄, Dp₃}. Assuming that U₁=0.25U₄, U₂=0.5U₄, and U₃=0.75U₄, the adjustment sequence may also be {0.25U₄, Dp₁, 0.5U₄, 0.75U₄, Dp₂, U₄, Dp₃}.

For example, N=4, and the adjustment sequence may be {U₁, Dp₁, U₂, U₃, Dp₂, U₄, Dp₃}. Assuming that U₁=0.4U₄, U₂=0.6U₄, and U₃=0.8U₄, the adjustment sequence may also be {0.4U₄, Dp₁, 0.6U₄, 0.6U₄, Dp₂, U₄, Dp₃}.

It should be noted that when a power of each converter subarray in a phase does not exceed a safe range after a voltage rises in a next phase, the foregoing power equalization control may be set and implemented or may not be set and implemented in the phase. Otherwise, power equalization control of the converter subarray should be implemented.

It should be noted that, after completing adjustment of a target alternating voltage or a target power, a converter in each converter subarray does not need to feed back completion to the first controller or the second controller, to reduce repeated confirmation time between the first controller or the second controller and the converter in each converter subarray, and simplify black start control complexity.

As shown in FIG. 3, in this embodiment, for example, the adjustment sequence is {U₁, Dp₁, U₂, Dp₂, U₃, Dp₃, ..., U_{N}, Dp_{N}}. The first controller 111 is further configured to: determine a first target power PM₁_1 of the converter subarray 20_1, a first target power PM₁_2 of the converter subarray 20_2, and a first target power PM₁_3 of the converter subarray 20_3 based on the first piece of power equalization control data in the adjustment sequence; and based on the first target power PM₁_1 of the converter subarray 20_1, the first target power PM₁_2 of the converter subarray 20_2, and the first target power PM₁_3 of the converter subarray 20_3, synchronously send, to the second controller 112_1, a first power adjustment instruction carrying the first target power PM₁_1, send, to the second controller 112_2, a first power adjustment instruction carrying the first target power PM₁_2, and send, to the second controller 112_3, a first power adjustment instruction carrying the first target power PM₁_3. In addition, the second controller 112_1 is further configured to send a first power output instruction to a communicatively connected drive controller in the converter subarray 20_1 based on the received first power adjustment instruction carrying the first target power PM₁_1. The drive controller in the converter subarray 20_1 is further configured to control, based on the received first power output instruction, a corresponding converter to output the first target power PM₁_1. In addition, the second controller 112_2 is further configured to send a first power output instruction to a communicatively connected drive controller in the converter subarray 20_2 based on the received first power adjustment instruction carrying the first target power PM₁_2. The drive controller in the converter subarray 20_2 is further configured to control, based on the received first power output instruction, a corresponding converter to output the first target power PM₁_2. In addition, the second controller 112_3 is further configured to send a first power output instruction to a communicatively connected drive controller in the converter subarray 20_3 based on the received first power adjustment instruction carrying the first target power PM₁_3. The drive controller in the converter subarray 20_3 is further configured to control, based on the received first power output instruction, a corresponding converter to output the first target power PM₁_3. In this way, after the converter establishes the first target alternating voltage and performs phase correction in the first voltage adjustment phase, and before the second voltage adjustment phase starts, power equalization between the converter subarrays may be controlled, so that a problem such as load power unequalization can be resolved.

It should be noted that for a process in which the first controller 111 controls power equalization between the converter subarrays based on other power equalization control data in the adjustment sequence, refer to the foregoing descriptions. Details are not described herein again.

In this embodiment, the first controller 111 is further configured to: obtain a power PM_{0q}_1 of an output port of the converter subarray 20_1, determine an average power value (that is, PM_{0q}_1/R1) of the converter subarray 20_1 based on the power PM_{0q}_1 of the output port of the converter subarray 20_1 and a quantity (for example, the quantity is R1) of converters in the converter subarray 20_1, and determine the determined average power value (that is, PM_{0q}_1/R1) of the converter subarray 20_1 as a q^{th} target power PM₁_q of the converter subarray 20_1. In addition, the first controller 111 is further configured to: obtain a power PM_{0q}_2 of an output port of the converter subarray 20_2, determine an average power value (that is, PM_{0q}_2/R2) of the converter subarray 20_2 based on the power PM_{0q}_2 of the output port of the converter subarray 20_2 and a quantity (for example, the quantity is R2) of converters in the converter subarray 20_2, and determine the determined average power value (that is, PM_{0q}_2/R2) of the converter subarray 20_2 as a q^{th} target power PM₂_q of the converter subarray 20_2. In addition, the first controller 111 is further configured to: obtain a power PM_{0q}_3 of an output port of the converter subarray 20_3, determine an average power value (that is, PM_{0q}_3/R3) of the converter subarray 20_3 based on the power PM_{0q}_3 of the output port of the converter subarray 20_3 and a quantity (for example, the quantity is R3) of converters in the converter subarray 20_3, and determine the determined average power value (that is, PM_{0q}_3/R3) of the converter subarray 20_3 as a q^{th} target power PM₃_q of the converter subarray 20_3.

For example, the first controller 111 may obtain a power of an output port of each converter subarray from a monitor system. Alternatively, the first controller 111 may obtain the power of the output port of each converter subarray from the first controller 111 corresponding to the converter subarray.

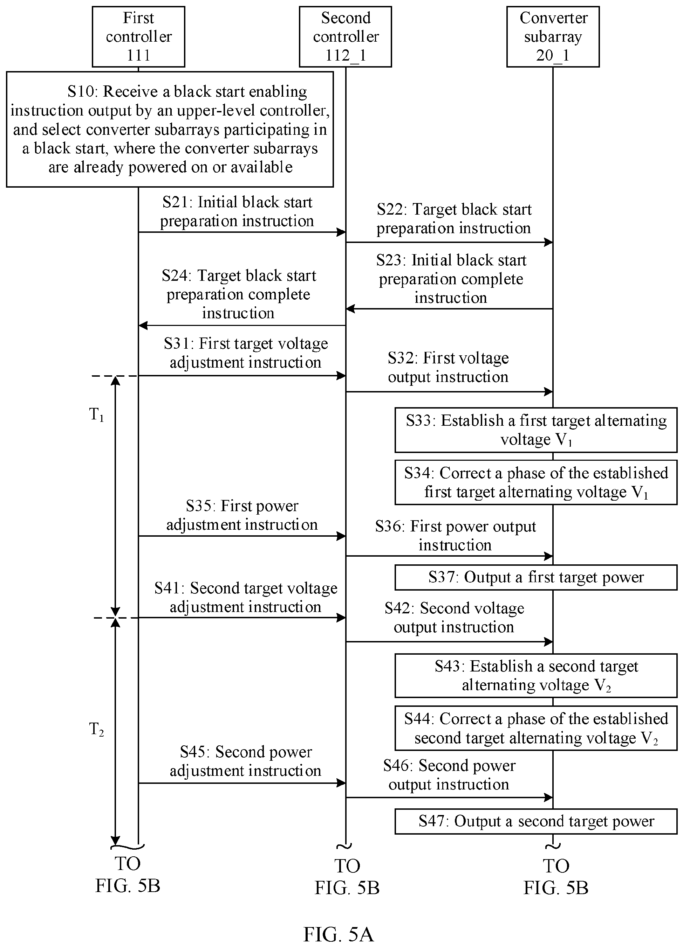

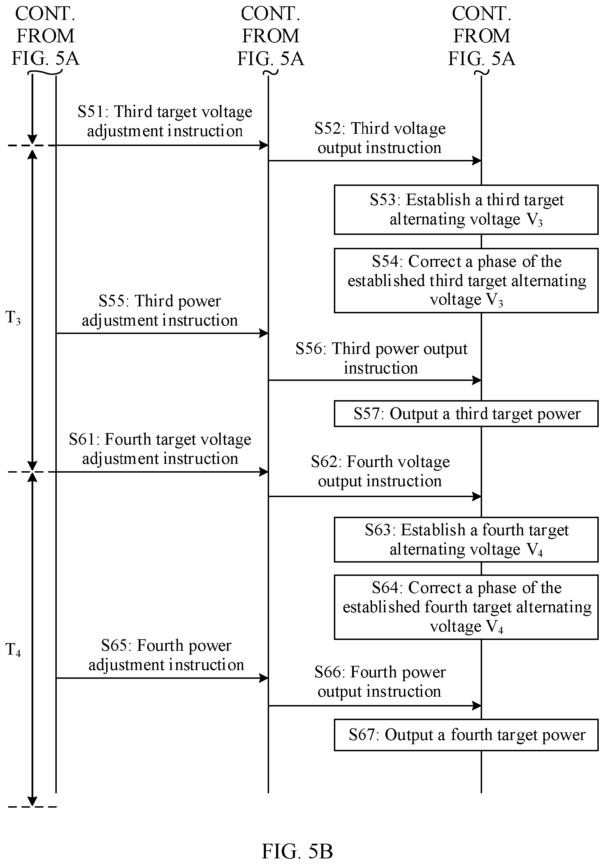

FIG. 5A and FIG. 5B are an interaction diagram of a specific embodiment of a black start control method according to another embodiment of the present invention. In FIG. 5A and FIG. 5B, the second controller 112_1 and the converter subarray 20_1 are used as an example for illustration.

As shown in FIG. 3 and FIG. 5A and FIG. 5B, the black start control method provided in this embodiment of this application may include the following steps.

For steps S10 to S34, refer to the foregoing descriptions. Details are not described herein again.

S35: The first controller 111 determines, based on the first piece of power equalization control data in the adjustment sequence, the first target power PM₁_1 of the converter subarray 20_1, the first target power PM₁_2 of the converter subarray 20_2, and the first target power PM₁_3 of the converter subarray 20_3; and synchronously sends, to the second controller 112_1, a first power adjustment instruction carrying the first target power PM₁_1, sends, to the second controller 112_2, the first power adjustment instruction carrying the first target power PM₁_2, and sends, to the second controller 112_3, the first power adjustment instruction carrying the first target power PM₁_3.

S36: The second controller 112_1 sends the first power output instruction to the drive controller in each converter in the converter subarray 20_1 based on the received first power adjustment instruction carrying the first target power PM₁_1.

In addition, the second controller 112_2 sends the first power output instruction to the drive controller in each converter in the converter subarray 20_2 based on the received first power adjustment instruction carrying the first target power PM₁_2.

In addition, the second controller 112_3 sends the first power output instruction to the drive controller in each converter in the converter subarray 20_3 based on the received first power adjustment instruction carrying the first target power PM₁_3.

S37: The drive controller in the converter subarray 20_1 controls, based on the received first power output instruction, a corresponding converter to output the first target power PM₁_1.

In addition, the drive controller in the converter subarray 20_2 controls, based on the received first power output instruction, a corresponding converter to output the first target power PM₁_2.

In addition, the drive controller in the converter subarray 20_3 controls, based on the received first power output instruction, a corresponding converter to output the first target power PM₁_3.

For steps S41 to S44, refer to the foregoing descriptions. Details are not described herein again.

S45: The first controller 111 determines, based on the second piece of power equalization control data in the adjustment sequence, the second target power PM₂_1 of the converter subarray 20_1, the second target power PM₂_2 of the converter subarray 20_2, and the second target power PM₂_3 of the converter subarray 20_3; and synchronously sends, to the second controller 112_1, the second power adjustment instruction carrying the second target power PM₂_1, sends, to the second controller 112_2, the second power adjustment instruction carrying the second target power PM₂_2, and sends, to the second controller 112_3, the second power adjustment instruction carrying the second target power PM₂_3.

S46: The second controller 112_1 sends the second power output instruction to the drive controller in each converter in the converter subarray 20_1 based on the received second power adjustment instruction carrying the second target power PM₂_1.

In addition, the second controller 112_2 sends the second power output instruction to the drive controller in each converter in the converter subarray 20_2 based on the received second power adjustment instruction carrying the second target power PM₂_2.

In addition, the second controller 112_3 sends the second power output instruction to the drive controller in each converter in the converter subarray 20_3 based on the received second power adjustment instruction carrying the second target power PM₂_3.

S47: The drive controller in the converter subarray 20_1 controls, based on the received second power output instruction, a corresponding converter to output the second target power PM₂_1.

In addition, the drive controller in the converter subarray 20_2 controls, based on the received second power output instruction, a corresponding converter to output the second target power PM₂_2.

In addition, the drive controller in the converter subarray 20_3 controls, based on the received second power output instruction, a corresponding converter to output the second target power PM₂_3.

For steps S51 to S54, refer to the foregoing descriptions. Details are not described herein again.

S55: The first controller 111 determines, based on the third piece of power equalization control data in the adjustment sequence, the third target power PM₃_1 of the converter subarray 20_1, the third target power PM₃_2 of the converter subarray 20_2, and the third target power PM₃_3 of the converter subarray 20_3; and synchronously sends, to the second controller 112_1, the third power adjustment instruction carrying the third target power PM₃_1, sends, to the second controller 112_2, the third power adjustment instruction carrying the third target power PM₃_2, and sends, to the second controller 112_3, the third power adjustment instruction carrying the third target power PM₃_3.

S56: The second controller 112_1 sends the third power output instruction to the drive controller in each converter in the converter subarray 20_1 based on the received third power adjustment instruction carrying the third target power PM₃_1.

In addition, the second controller 112_2 sends the third power output instruction to the drive controller in each converter in the converter subarray 20_2 based on the received third power adjustment instruction carrying the third target power PM₃_2.

In addition, the second controller 112_3 sends the third power output instruction to the drive controller in each converter in the converter subarray 20_3 based on the received third power adjustment instruction carrying the third target power PM₃_3.

S57: The drive controller in the converter subarray 20_1 controls, based on the received third power output instruction, a corresponding converter to output the third target power PM₃_1.

In addition, the drive controller in the converter subarray 20_2 controls, based on the received third power output instruction, a corresponding converter to output the third target power PM₃_2.

In addition, the drive controller in the converter subarray 20_3 controls, based on the received third power output instruction, a corresponding converter to output the third target power PM₃_3.

For steps S61 to S64, refer to the foregoing descriptions. Details are not described herein again.

S65: The first controller 111 determines, based on the fourth piece of power equalization control data in the adjustment sequence, the fourth target power PM₄_1 of the converter subarray 20_1, the fourth target power PM₄_2 of the converter subarray 20_2, and the fourth target power PM₄_3 of the converter subarray 20_3; and synchronously sends, to the second controller 112_1, the fourth power adjustment instruction carrying the fourth target power PM₄_1, sends, to the second controller 112_2, the fourth power adjustment instruction carrying the fourth target power PM₄_2, and sends, to the second controller 112_3, the fourth power adjustment instruction carrying the fourth target power PM₄_3.

S66: The second controller 112_1 sends the fourth power output instruction to the drive controller in each converter in the converter subarray 20_1 based on the received fourth power adjustment instruction carrying the fourth target power PM₄_1.

In addition, the second controller 112_2 sends the fourth power output instruction to the drive controller in each converter in the converter subarray 20_2 based on the received fourth power adjustment instruction carrying the fourth target power PM₄_2.

In addition, the second controller 112_3 sends the fourth power output instruction to the drive controller in each converter in the converter subarray 20_3 based on the received fourth power adjustment instruction carrying the fourth target power PM₄_3.

S67: The drive controller in the converter subarray 20_1 controls, based on the received fourth power output instruction, a corresponding converter to output the fourth target power PM₄_1.

In addition, the drive controller in the converter subarray 20_2 controls, based on the received fourth power output instruction, a corresponding converter to output the fourth target power PM₄_2.

In addition, the drive controller in the converter subarray 20_3 controls, based on the received fourth power output instruction, a corresponding converter to output the fourth target power PM₄_3.

In other embodiments of this application, the implementations in the foregoing embodiment are modified. The following describes only differences between this embodiment and the foregoing embodiments, and similarities are not described herein again.

In this embodiment, each converter in each converter subarray is a voltage source converter. In addition, one converter in each converter subarray is a master converter, and other converters are slave converters. The second controller is further configured to send the n^{th} voltage output instruction to a drive controller in a master converter in the corresponding converter subarray. The drive controller connected to the master converter is further configured to: control, based on the received n^{th} voltage output instruction, the master converter to establish an n^{th} target alternating voltage, and send a slave voltage output instruction to a drive controller in the slave converter based on the received n^{th} voltage output instruction. The drive controller in the slave converter is configured to control, based on the received slave voltage output instruction, the slave converter to establish the n^{th} target alternating voltage.

For example, as shown in FIG. 3, in the converter subarray 20_1, one converter is a master converter, and other converters are slave converters. The second controller 112_1 is configured to send an n^{th} voltage output instruction to a drive controller in the master converter in the converter subarray 20_1. The drive controller connected to the master converter in the converter subarray 20_1 is further configured to: control, based on a received n^{th} voltage output instruction, the master converter to establish an n^{th} target alternating voltage, and send a slave voltage output instruction to a drive controller in the slave converter in the converter subarray 20_1 based on the received n^{th} voltage output instruction. The drive controller in the slave converter in the converter subarray 20_1 is configured to control, based on the received slave voltage output instruction, the slave converter to establish an n^{th} target alternating voltage.

For example, as shown in FIG. 3, in the converter subarray 20_2, one converter is a master converter, and other converters are slave converters. The second controller 112_2 is configured to send an n^{th} voltage output instruction to a drive controller in the master converter in the converter subarray 20_2. The drive controller connected to the master converter in the converter subarray 20_2 is further configured to: control, based on a received n^{th} voltage output instruction, the master converter to establish an n^{th} target alternating voltage, and send a slave voltage output instruction to a drive controller in the slave converter in the converter subarray 20_2 based on the received n^{th} voltage output instruction. The drive controller in the slave converter in the converter subarray 20_2 is configured to control, based on the received slave voltage output instruction, the slave converter to establish an n^{th} target alternating voltage.

For example, as shown in FIG. 3, in the converter subarray 20_3, one converter is a master converter, and other converters are slave converters. The second controller 112_3 is configured to send an n^{th} voltage output instruction to a drive controller in the master converter in the converter subarray 20_3. The drive controller connected to the master converter in the converter subarray 20_3 is further configured to: control, based on a received n^{th} voltage output instruction, the master converter to establish an n^{th} target alternating voltage, and send a slave voltage output instruction to a drive controller in the slave converter in the converter subarray 20_3 based on the received n^{th} voltage output instruction. The drive controller in the slave converter in the converter subarray 20_3 is configured to control, based on the received slave voltage output instruction, the slave converter to establish an n^{th} target alternating voltage.

For an interaction diagram of a specific embodiment of a black start control method according to still another embodiment of the present invention, refer to FIG. 5A and FIG. 5B. For steps S10 to S31, steps S34 to S41, steps S44 to S51, steps S54 to S61, and steps S64 to S67, refer to the foregoing descriptions. Details are not described herein again.

In this embodiment, step S32 is: The second controller 112_1 sends a first voltage output instruction to the drive controller in the master converter in the converter subarray 20_1 based on the received first target voltage adjustment instruction.

In addition, the second controller 112_2 sends a first voltage output instruction to the drive controller in the master converter in the converter subarray 20_2 based on the received first target voltage adjustment instruction.

In addition, the second controller 112_3 sends a first voltage output instruction to the drive controller in the master converter in the converter subarray 20_3 based on the received first target voltage adjustment instruction.

Step S33 is: The drive controller in the master converter in the converter subarray 20_1 controls a switching frequency of a switch in the corresponding converter based on the received first voltage output instruction to convert electric energy of the direct current source 50_1 into a first target alternating voltage V₁ of the power frequency alternating current, to establish the first target alternating voltage V₁. In addition, the master converter in the converter subarray 20_1 sends a slave voltage output instruction to the drive controller in the slave converter in the converter subarray 20_1 based on the received first voltage output instruction. The drive controller in the slave converter in the converter subarray 20_1 controls, based on the received slave voltage output instruction, the slave converter to establish a first target alternating voltage V₁. In addition, the first target alternating voltage V₁ is converted by the first transformer 40_1 into a first target bus alternating voltage output to the first alternating current bus 60.

In addition, the drive controller in the master converter in the converter subarray 20_2 controls a switching frequency of a switch in the corresponding converter based on the received first voltage output instruction to convert electric energy of the direct current source 50_2 into a first target alternating voltage V₁ of the power frequency alternating current, to establish the first target alternating voltage V₁. In addition, the master converter in the converter subarray 20_2 sends a slave voltage output instruction to the drive controller in the slave converter in the converter subarray 20_2 based on the received first voltage output instruction. The drive controller in the slave converter in the converter subarray 20_2 controls, based on the received slave voltage output instruction, the slave converter to establish a first target alternating voltage V₁. In addition, the first target alternating voltage V₁ is converted by the first transformer 40_2 into a first target bus alternating voltage output to the first alternating current bus 60.

In addition, the drive controller in the master converter in the converter subarray 20_3 controls a switching frequency of a switch in the corresponding converter based on the received first voltage output instruction to convert electric energy of the direct current source 50_3 into a first target alternating voltage V₁ of the power frequency alternating current, to establish the first target alternating voltage V₁. In addition, the master converter in the converter subarray 20_3 sends a slave voltage output instruction to the drive controller in the slave converter in the converter subarray 20_3 based on the received first voltage output instruction. The drive controller in the slave converter in the converter subarray 20_3 controls, based on the received slave voltage output instruction, the slave converter to establish a first target alternating voltage V₁. In addition, the first target alternating voltage V₁ is converted by the first transformer 40_3 into a first target bus alternating voltage output to the first alternating current bus 60.

Step S42 is: The second controller 112_1 sends a second voltage output instruction to the drive controller in the master converter in the converter subarray 20_1 based on the received second target voltage adjustment instruction.

In addition, the second controller 112_2 sends a second voltage output instruction to the drive controller in the master converter in the converter subarray 20_2 based on the received second target voltage adjustment instruction.

In addition, the second controller 112_3 sends a second voltage output instruction to the drive controller in the master converter in the converter subarray 20_3 based on the received second target voltage adjustment instruction.

Step S43 is: The drive controller in the master converter in the converter subarray 20_1 controls a switching frequency of a switch in the corresponding converter based on the received second voltage output instruction to convert electric energy of the direct current source 50_1 into a second target alternating voltage V₂ of the power frequency alternating current, to establish the second target alternating voltage V₂. In addition, the master converter in the converter subarray 20_1 sends a slave voltage output instruction to the drive controller in the slave converter in the converter subarray 20_1 based on the received second voltage output instruction. The drive controller in the slave converter in the converter subarray 20_1 controls, based on the received slave voltage output instruction, the slave converter to establish a second target alternating voltage V₂. In addition, the second target alternating voltage V₂ is converted by the first transformer 40_1 into a second target bus alternating voltage output to the first alternating current bus 60.

In addition, the drive controller in the master converter in the converter subarray 20_2 controls a switching frequency of a switch in the corresponding converter based on the received second voltage output instruction to convert electric energy of the direct current source 50_2 into a second target alternating voltage V₂ of the power frequency alternating current, to establish the second target alternating voltage V₂. In addition, the master converter in the converter subarray 20_2 sends a slave voltage output instruction to the drive controller in the slave converter in the converter subarray 20_2 based on the received second voltage output instruction. The drive controller in the slave converter in the converter subarray 20_2 controls, based on the received slave voltage output instruction, the slave converter to establish a second target alternating voltage V₂. In addition, the second target alternating voltage V₂ is converted by the first transformer 40_2 into a second target bus alternating voltage output to the first alternating current bus 60.

In addition, the drive controller in the master converter in the converter subarray 20_3 controls a switching frequency of a switch in the corresponding converter based on the received second voltage output instruction to convert electric energy of the direct current source 50_3 into a second target alternating voltage V₂ of the power frequency alternating current, to establish the second target alternating voltage V₂. In addition, the master converter in the converter subarray 20_3 sends a slave voltage output instruction to the drive controller in the slave converter in the converter subarray 20_3 based on the received second voltage output instruction. The drive controller in the slave converter in the converter subarray 20_3 controls, based on the received slave voltage output instruction, the slave converter to establish a second target alternating voltage V₂. In addition, the second target alternating voltage V₂ is converted by the first transformer 40_3 into a second target bus alternating voltage output to the first alternating current bus 60.

Step S52 is: The second controller 112_1 sends a third voltage output instruction to the drive controller in the master converter in the converter subarray 20_1 based on the received third target voltage adjustment instruction.

In addition, the second controller 112_2 sends a third voltage output instruction to the drive controller in the master converter in the converter subarray 20_2 based on the received third target voltage adjustment instruction.

In addition, the second controller 112_3 sends a third voltage output instruction to the drive controller in the master converter in the converter subarray 20_3 based on the received third target voltage adjustment instruction.

Step S53 is: The drive controller in the master converter in the converter subarray 20_1 controls a switching frequency of a switch in the corresponding converter based on the received third voltage output instruction to convert electric energy of the direct current source 50_1 into a third target alternating voltage V₃ of the power frequency alternating current, to establish the third target alternating voltage V₃. In addition, the master converter in the converter subarray 20_1 sends a slave voltage output instruction to the drive controller in the slave converter in the converter subarray 20_1 based on the received third voltage output instruction. The drive controller in the slave converter in the converter subarray 20_1 controls, based on the received slave voltage output instruction, the slave converter to establish a third target alternating voltage V₃. In addition, the third target alternating voltage V₃ is converted by the first transformer 40_1 into a third target bus alternating voltage output to the first alternating current bus 60.

In addition, the drive controller in the master converter in the converter subarray 20_2 controls a switching frequency of a switch in the corresponding converter based on the received third voltage output instruction to convert electric energy of the direct current source 50_2 into a third target alternating voltage V₃ of the power frequency alternating current, to establish the third target alternating voltage V₃. In addition, the master converter in the converter subarray 20_2 sends a slave voltage output instruction to the drive controller in the slave converter in the converter subarray 20_2 based on the received third voltage output instruction. The drive controller in the slave converter in the converter subarray 20_2 controls, based on the received slave voltage output instruction, the slave converter to establish a third target alternating voltage V₃. In addition, the third target alternating voltage V₃ is converted by the first transformer 40_2 into a third target bus alternating voltage output to the first alternating current bus 60.

In addition, the drive controller in the master converter in the converter subarray 20_3 controls a switching frequency of a switch in the corresponding converter based on the received third voltage output instruction to convert electric energy of the direct current source 50_3 into a third target alternating voltage V₃ of the power frequency alternating current, to establish the third target alternating voltage V₃. In addition, the master converter in the converter subarray 20_3 sends a slave voltage output instruction to the drive controller in the slave converter in the converter subarray 20_3 based on the received third voltage output instruction. The drive controller in the slave converter in the converter subarray 20_3 controls, based on the received slave voltage output instruction, the slave converter to establish a third target alternating voltage V₃. In addition, the third target alternating voltage V₃ is converted by the first transformer 40_3 into a third target bus alternating voltage output to the first alternating current bus 60.

Step S62 is: The second controller 112_1 sends a fourth voltage output instruction to the drive controller in the master converter in the converter subarray 20_1 based on the received fourth target voltage adjustment instruction.

In addition, the second controller 112_2 sends a fourth voltage output instruction to the drive controller in the master converter in the converter subarray 20_2 based on the received fourth target voltage adjustment instruction.

In addition, the second controller 112_3 sends a fourth voltage output instruction to the drive controller in the master converter in the converter subarray 20_3 based on the received fourth target voltage adjustment instruction.

Step S63 is: The drive controller in the master converter in the converter subarray 20_1 controls a switching frequency of a switch in the corresponding converter based on the received fourth voltage output instruction to convert electric energy of the direct current source 50_1 into a fourth target alternating voltage V₄ of the power frequency alternating current, to establish the fourth target alternating voltage V₄. In addition, the master converter in the converter subarray 20_1 sends a slave voltage output instruction to the drive controller in the slave converter in the converter subarray 20_1 based on the received fourth voltage output instruction. The drive controller in the slave converter in the converter subarray 20_1 controls, based on the received slave voltage output instruction, the slave converter to establish a fourth target alternating voltage V₄. In addition, the fourth target alternating voltage V₄ is converted by the first transformer 40_1 into a fourth target bus alternating voltage output to the first alternating current bus 60.

In addition, the drive controller in the master converter in the converter subarray 20_2 controls a switching frequency of a switch in the corresponding converter based on the received fourth voltage output instruction to convert electric energy of the direct current source 50_2 into a fourth target alternating voltage V₄ of the power frequency alternating current, to establish the fourth target alternating voltage V₄. In addition, the master converter in the converter subarray 20_2 sends a slave voltage output instruction to the drive controller in the slave converter in the converter subarray 20_2 based on the received fourth voltage output instruction. The drive controller in the slave converter in the converter subarray 20_2 controls, based on the received slave voltage output instruction, the slave converter to establish a fourth target alternating voltage V₄. In addition, the fourth target alternating voltage V₄ is converted by the first transformer 40_2 into a fourth target bus alternating voltage output to the first alternating current bus 60.

In addition, the drive controller in the master converter in the converter subarray 20_3 controls a switching frequency of a switch in the corresponding converter based on the received fourth voltage output instruction to convert electric energy of the direct current source 50_3 into a fourth target alternating voltage V₄ of the power frequency alternating current, to establish the fourth target alternating voltage V₄. In addition, the master converter in the converter subarray 20_3 sends a slave voltage output instruction to the drive controller in the slave converter in the converter subarray 20_3 based on the received fourth voltage output instruction. The drive controller in the slave converter in the converter subarray 20_3 controls, based on the received slave voltage output instruction, the slave converter to establish a fourth target alternating voltage V₄. In addition, the fourth target alternating voltage V₄ is converted by the first transformer 40_3 into a fourth target bus alternating voltage output to the first alternating current bus 60.

In other embodiments of this application, the implementations in the foregoing embodiment are modified. The following describes only differences between this embodiment and the foregoing embodiments, and similarities are not described herein again.

In this embodiment, in each converter subarray, one converter is a voltage source converter, and other converters are current source converters. The second controller is further configured to send an n^{th} voltage output instruction to a drive controller connected to the voltage source converter.

For example, as shown in FIG. 3, in the converter subarray 20_1, one converter is a voltage source converter, and other converters are current source converters. The second controller 112_1 is further configured to send an n^{th} voltage output instruction to a drive controller in the voltage source converter in the converter subarray 20_1. A voltage of an output port of a current source converter in the converter subarray 20_1 may follow a voltage of an output port of the voltage source converter.

For example, as shown in FIG. 3, in the converter subarray 20_2, one converter is a voltage source converter, and other converters are current source converters. The second controller 112_2 is further configured to send an n^{th} voltage output instruction to a drive controller in the voltage source converter in the converter subarray 20_2. A voltage of an output port of a current source converter in the converter subarray 20_2 may follow a voltage of an output port of the voltage source converter.

For example, as shown in FIG. 3, in the converter subarray 20_3, one converter is a voltage source converter, and other converters are current source converters. The second controller 112_3 is further configured to send an n^{th} voltage output instruction to a drive controller in the voltage source converter in the converter subarray 20_3. A voltage of an output port of a current source converter in the converter subarray 20_3 may follow a voltage of an output port of the voltage source converter.

For an interaction diagram of a specific embodiment of a black start control method according to still another embodiment of the present invention, refer to FIG. 5A and FIG. 5B. For steps S10 to S31, steps S34 to S41, steps S44 to S51, steps S54 to S61, and steps S64 to S67, refer to the foregoing descriptions. Details are not described herein again.

In this embodiment, step S32 is: The second controller 112_1 sends a first voltage output instruction to the drive controller in the voltage source converter in the converter subarray 20_1 based on the received first target voltage adjustment instruction.

In addition, the second controller 112_2 sends a first voltage output instruction to the drive controller in the voltage source converter in the converter subarray 20_2 based on the received first target voltage adjustment instruction.

In addition, the second controller 112_3 sends a first voltage output instruction to the drive controller in the voltage source converter in the converter subarray 20_3 based on the received first target voltage adjustment instruction.

Step S33 is: The drive controller in the voltage source converter in the converter subarray 20_1 controls a switching frequency of a switch in the corresponding converter based on the received first voltage output instruction to convert electric energy of the direct current source 50_1 into a first target alternating voltage V₁ of the power frequency alternating current, to establish the first target alternating voltage V₁. In addition, the current source converter in the converter subarray 20_1 outputs the first target alternating voltage V₁ following the voltage source converter. In addition, the first target alternating voltage V₁ is converted by the first transformer 40_1 into a first target bus alternating voltage output to the first alternating current bus 60.

In addition, the drive controller in the voltage source converter in the converter subarray 20_2 controls a switching frequency of a switch in the corresponding converter based on the received first voltage output instruction to convert electric energy of the direct current source 50_2 into a first target alternating voltage V₁ of the power frequency alternating current, to establish the first target alternating voltage V₁. In addition, the current source converter in the converter subarray 20_2 outputs the first target alternating voltage V₁ following the voltage source converter. In addition, the first target alternating voltage V₁ is converted by the first transformer 40_2 into a first target bus alternating voltage output to the first alternating current bus 60.

In addition, the drive controller in the voltage source converter in the converter subarray 20_3 controls a switching frequency of a switch in the corresponding converter based on the received first voltage output instruction to convert electric energy of the direct current source 50_3 into a first target alternating voltage V₁ of the power frequency alternating current, to establish the first target alternating voltage V₁. In addition, the current source converter in the converter subarray 20_3 outputs the first target alternating voltage V₁ following the voltage source converter. In addition, the first target alternating voltage V₁ is converted by the first transformer 40_3 into a first target bus alternating voltage output to the first alternating current bus 60.

Step S42 is: The second controller 112_1 sends a second voltage output instruction to the drive controller in the voltage source converter in the converter subarray 20_1 based on the received second target voltage adjustment instruction.

In addition, the second controller 112_2 sends a second voltage output instruction to the drive controller in the voltage source converter in the converter subarray 20_2 based on the received second target voltage adjustment instruction.

In addition, the second controller 112_3 sends a second voltage output instruction to the drive controller in the voltage source converter in the converter subarray 20_3 based on the received second target voltage adjustment instruction.

Step S43 is: The drive controller in the voltage source converter in the converter subarray 20_1 controls a switching frequency of a switch in the corresponding converter based on the received second voltage output instruction to convert electric energy of the direct current source 50_1 into a second target alternating voltage V₂ of the power frequency alternating current, to establish the second target alternating voltage V₂. In addition, the current source converter in the converter subarray 20_1 outputs the second target alternating voltage V₂ following the voltage source converter. In addition, the second target alternating voltage V₂ is converted by the first transformer 40_1 into a second target bus alternating voltage output to the first alternating current bus 60.

In addition, the drive controller in the voltage source converter in the converter subarray 20_2 controls a switching frequency of a switch in the corresponding converter based on the received second voltage output instruction to convert electric energy of the direct current source 50_2 into a second target alternating voltage V₂ of the power frequency alternating current, to establish the second target alternating voltage V₂. In addition, the current source converter in the converter subarray 20_2 outputs the second target alternating voltage V₂ following the voltage source converter. In addition, the second target alternating voltage V₂ is converted by the first transformer 40_2 into a second target bus alternating voltage output to the first alternating current bus 60.

In addition, the drive controller in the voltage source converter in the converter subarray 20_3 controls a switching frequency of a switch in the corresponding converter based on the received second voltage output instruction to convert electric energy of the direct current source 50_3 into a second target alternating voltage V₂ of the power frequency alternating current, to establish the second target alternating voltage V₂. In addition, the current source converter in the converter subarray 20_3 outputs the second target alternating voltage V₂ following the voltage source converter. In addition, the second target alternating voltage V₂ is converted by the first transformer 40_3 into a second target bus alternating voltage output to the first alternating current bus 60.

Step S52 is: The second controller 112_1 sends a third voltage output instruction to the drive controller in the voltage source converter in the converter subarray 20_1 based on the received third target voltage adjustment instruction.

In addition, the second controller 112_2 sends a third voltage output instruction to the drive controller in the voltage source converter in the converter subarray 20_2 based on the received third target voltage adjustment instruction.

In addition, the second controller 112_3 sends a third voltage output instruction to the drive controller in the voltage source converter in the converter subarray 20_3 based on the received third target voltage adjustment instruction.

Step S53 is: The drive controller in the voltage source converter in the converter subarray 20_1 controls a switching frequency of a switch in the corresponding converter based on the received third voltage output instruction to convert electric energy of the direct current source 50_1 into a third target alternating voltage V₃ of the power frequency alternating current, to establish the third target alternating voltage V₃. In addition, the current source converter in the converter subarray 20_1 outputs the third target alternating voltage V₃ following the voltage source converter. In addition, the third target alternating voltage V₃ is converted by the first transformer 40_1 into a third target bus alternating voltage output to the first alternating current bus 60.

In addition, the drive controller in the voltage source converter in the converter subarray 20_2 controls a switching frequency of a switch in the corresponding converter based on the received third voltage output instruction to convert electric energy of the direct current source 50_2 into a third target alternating voltage V₃ of the power frequency alternating current, to establish the third target alternating voltage V₃. In addition, the current source converter in the converter subarray 20_2 outputs the third target alternating voltage V₃ following the voltage source converter. In addition, the third target alternating voltage V₃ is converted by the first transformer 40_2 into a third target bus alternating voltage output to the first alternating current bus 60.

In addition, the drive controller in the voltage source converter in the converter subarray 20_3 controls a switching frequency of a switch in the corresponding converter based on the received third voltage output instruction to convert electric energy of the direct current source 50_3 into a third target alternating voltage V₃ of the power frequency alternating current, to establish the third target alternating voltage V₃. In addition, the current source converter in the converter subarray 20_3 outputs the third target alternating voltage V₃ following the voltage source converter. In addition, the third target alternating voltage V₃ is converted by the first transformer 40_3 into a third target bus alternating voltage output to the first alternating current bus 60.

Step S62 is: The second controller 112_1 sends a fourth voltage output instruction to the drive controller in the voltage source converter in the converter subarray 20_1 based on the received fourth target voltage adjustment instruction.

In addition, the second controller 112_2 sends a fourth voltage output instruction to the drive controller in the voltage source converter in the converter subarray 20_2 based on the received fourth target voltage adjustment instruction.

In addition, the second controller 112_3 sends a fourth voltage output instruction to the drive controller in the voltage source converter in the converter subarray 20_3 based on the received fourth target voltage adjustment instruction.

Step S63 is: The drive controller in the voltage source converter in the converter subarray 20_1 controls a switching frequency of a switch in the corresponding converter based on the received fourth voltage output instruction to convert electric energy of the direct current source 50_1 into a fourth target alternating voltage V₄ of the power frequency alternating current, to establish the fourth target alternating voltage V₄. In addition, the current source converter in the converter subarray 20_1 outputs the fourth target alternating voltage V₄ following the voltage source converter. In addition, the fourth target alternating voltage V₄ is converted by the first transformer 40_1 into a fourth target bus alternating voltage output to the first alternating current bus 60.

In addition, the drive controller in the voltage source converter in the converter subarray 20_2 controls a switching frequency of a switch in the corresponding converter based on the received fourth voltage output instruction to convert electric energy of the direct current source 50_2 into a fourth target alternating voltage V₄ of the power frequency alternating current, to establish the fourth target alternating voltage V₄. In addition, the current source converter in the converter subarray 20_2 outputs the fourth target alternating voltage V₄ following the voltage source converter. In addition, the fourth target alternating voltage V₄ is converted by the first transformer 40_2 into a fourth target bus alternating voltage output to the first alternating current bus 60.

In addition, the drive controller in the voltage source converter in the converter subarray 20_3 controls a switching frequency of a switch in the corresponding converter based on the received fourth voltage output instruction to convert electric energy of the direct current source 50_3 into a fourth target alternating voltage V₄ of the power frequency alternating current, to establish the fourth target alternating voltage V₄. In addition, the current source converter in the converter subarray 20_3 outputs the fourth target alternating voltage V₄ following the voltage source converter. In addition, the fourth target alternating voltage V₄ is converted by the first transformer 40_3 into a fourth target bus alternating voltage output to the first alternating current bus 60.

In other embodiments of this application, the implementations in the foregoing embodiment are modified. The following describes only differences between this embodiment and the foregoing embodiments, and similarities are not described herein again.

In this embodiment, the switch control module may also be configured to: first control control switches connected to a first part of converter subarrays in the plurality of converter subarrays to be turned on, so that an output port of each converter in each of the first part of converter subarrays and an input end of a corresponding transformer are connected in a parallel manner, and output ends of transformers corresponding to the first part of converter subarrays and the first alternating current bus are connected; then, send a start instruction to each of the first part of converter subarrays, to control each of the first part of converter subarrays to be powered on, so that each of the first part of converter subarrays is already powered on or available state before the black start is implemented; then, control control switches connected to a second part of converter subarrays in the plurality of converter subarrays to be turned on, so that an output port of each converter in each of the second part of converter subarrays and an input end of a corresponding transformer are connected in a parallel manner, and output ends of transformers corresponding to the second part of converter subarrays and the first alternating current bus are connected; and then, send a start instruction to each of the second part of converter subarrays, to control each of the second part of converter subarrays to be powered on, so that each of the second part of converter subarrays is already powered on or available state before the black start is implemented.

In this embodiment, as shown in FIG. 3, the first controller 111 is further configured to: after controlling each of the first part of converter subarrays to be powered on, and before controlling the control switches connected to the second part of converter subarrays in the plurality of converter subarrays to be turned on, synchronously send an initial voltage adjustment instruction to a corresponding second controller in each of the first part of converter subarrays. The corresponding second controller in each of the first part of converter subarrays is further configured to send the initial voltage output instruction to the communicatively connected drive controller based on the received initial voltage adjustment instruction. The drive controller in each of the first part of converter subarrays is further configured to control, based on the received initial voltage output instruction, a corresponding converter to establish an initial alternating voltage, so that the initial alternating voltage is converted by the first transformer into an initial bus alternating voltage input to the first alternating current bus 60. The initial bus alternating voltage is less than the first target bus alternating voltage.

In this embodiment, the initial bus alternating voltage is first established on the first alternating current bus 60 by using the first part of converter subarrays. Then, after other converter subarrays are grid-connected, the first part of converter subarrays and the second part of converter subarrays are combined to increase the voltage on the first alternating current bus 60 by phase, and power equalization control is implemented until a rated voltage is established on the first alternating current bus 60.

In this application, a quantity of converter subarrays in the first part of converter subarrays is less than a quantity of converter subarrays in the second part of converter subarrays. For example, the first part of converter subarrays include one of the plurality of converter subarrays, and the second part of converter subarrays include other converter subarrays of the plurality of converter subarrays other than the first part of converter subarrays. For example, as shown in FIG. 3, the first part of converter subarrays may include the converter subarray 20_1, and the second part of converter subarrays may include the converter subarrays 20_2 and 20_3.

For an interaction diagram of a specific embodiment of a black start control method according to still another embodiment of the present invention, refer to FIG. 5A and FIG. 5B. For steps S21 to S67, refer to the foregoing descriptions. Details are not described herein again.

In this embodiment, step S10 is: A staff may input a black start enabling instruction to the first controller 111 by using an upper-level controller, and the first controller 111 may receive the black start enabling instruction output by the upper-level controller, and after receiving the black start enabling instruction output by the upper-level controller, may select converter subarrays participating in a black start. For example, the selected converter subarrays participating in the black start are 20_1 to 20_3. The first controller 111 sends IDs of the selected converter subarrays 20_1 to 20_3 participating in the black start to the switch control module 12. The switch control module 12 controls the control switches 321_1 and 322_1 connected to the converter subarray 20_1 to be turned on, so that an output port of each converter in the converter subarray 20_1 and an input end of the first transformer 40_1 are connected in parallel, and an output end of the first transformer 40_1 and the first alternating current bus 60 are connected. In this way, the converter in the converter subarray 20_1 and an alternating current power grid that needs to be started and run can be connected to each other on a circuit.

Then, the first controller 111 sends a subarray start instruction to the second controller 112_1 corresponding to the converter subarray 20_1.

Then, the second controller 112_1 sends a converter power-on instruction to a drive controller in each converter in the converter subarray 20_1 based on the received subarray start instruction. The drive controller in each converter in the converter subarray 20_1 controls, based on the received converter power-on instruction, the converter to be powered on, so that each converter in the converter subarray 20_1 is already powered on or available before the black start is implemented.

Then, the first controller 111 sends an initial voltage adjustment instruction to the second controller 112_1.

Then, the second controller 112_1 sends an initial voltage output instruction to the drive controller in each converter in the converter subarray 20_1 based on the received initial voltage adjustment instruction.

Then, the drive controller in each converter in the converter subarray 20_1 controls, based on the received initial voltage output instruction, a corresponding converter to establish an initial alternating voltage, so that the initial alternating voltage is converted by the first transformer 40_1 into an initial bus alternating voltage input to the first alternating current bus 60.

Then, the switch control module 12 controls the control switches 321_2, 322_2, 321_3, and 322_3 connected to the converter subarrays 20_2 and 20_3 to be turned on, so that an output port of each converter in the converter subarray 20_2 and an input end of the first transformer 40_2 are connected in a parallel manner, an output port of each converter in the converter subarray 20_3 and an input end of the first transformer 40_3 are connected in a parallel manner, output ends of the first transformers 40_2 and 40_3 and the first alternating current bus 60 are connected in a parallel manner. In this way, the converters in the converter subarrays and an alternating current power grid that needs to be started and run can be connected to each other on a circuit. Then, the first controller 111 synchronously sends a subarray start instruction to the second controllers 112_2 and 112_3 corresponding to the converter subarrays 20_2 and 20_3.

The second controller 112_2 sends a converter power-on instruction to a drive controller in each converter in the converter subarray 20_2 based on the received subarray start instruction. The drive controller in each converter in the converter subarray 20_2 controls, based on the received converter power-on instruction, the converter to be powered on, so that each converter in the converter subarray 20_2 is already powered on or available before the black start is implemented.

In addition, the second controller 112_3 sends a converter power-on instruction to a drive controller in each converter in the converter subarray 20_3 based on the received subarray start instruction. The drive controller in each converter in the converter subarray 20_3 controls, based on the received converter power-on instruction, the converter to be powered on, so that each converter in the converter subarray 20_3 is already powered on or available before the black start is implemented.

An embodiment of this application further provides a black start control method based on a plurality of converter subarrays. The black start control method includes: sequentially performing working processes of a first voltage adjustment phase to an N^{th} voltage adjustment phase after controlling a control switch to be turned on and controlling a converter in each converter subarray to be powered on; and in an n^{th} voltage adjustment phase of the first voltage adjustment phase to the N^{th} voltage adjustment phase, synchronously sending an n^{th} target voltage adjustment instruction to each converter subarray, to control each converter in the converter subarray to establish an n^{th} target alternating voltage, so that the n^{th} target alternating voltage is converted by a first transformer into an n^{th} target bus alternating voltage input to a first alternating current bus, where n and N are integers greater than 1, 1≤n≤N, the n^{th} target alternating voltage is greater than an (n-1)^{th} target alternating voltage, the n^{th} target bus alternating voltage is greater than an (n-1)^{th} target bus alternating voltage, and an N^{th} target bus alternating voltage is a rated alternating voltage of the first alternating current bus.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the scope of this application. This application is intended to cover these modifications and variations of this application provided that they fall within the scope of protection defined by the following claims.

## Claims

1. A black start controller (11) based on a plurality of converter subarrays, wherein at least one of the plurality of converter subarrays (20_1) comprises at least one converter, an input port of each of the plurality of converter subarrays is connected to a direct current source (50_1), and an output port of each of the plurality of converter subarrays is connected to a first alternating current bus (60) through a first transformer (40_2) and a control switch (12); and
the black start controller is configured to: sequentially perform working processes of a first voltage adjustment phase to an N^{th} voltage adjustment phase after controlling the control switch to be turned on and controlling a converter in each converter subarray to be powered on; and in an n^{th} voltage adjustment phase of the first voltage adjustment phase to the N^{th} voltage adjustment phase, synchronously send an n^{th} target voltage adjustment instruction to each converter subarray, to control each converter in the converter subarray to establish an n^{th} target alternating voltage, so that the n^{th} target alternating voltage is converted by the first transformer into an n^{th} target bus alternating voltage input to the first alternating current bus, wherein
n and N are integers, and N is greater than 1, 1≤n≤N, the n^{th} target alternating voltage is greater than an (n-1)^{th} target alternating voltage, the n^{th} target bus alternating voltage is greater than an (n-1)^{th} target bus alternating voltage, and an N^{th} target bus alternating voltage is a rated alternating voltage of the first alternating current bus, **characterised in that**
the black start controller comprises a first controller (111) and a plurality of second controllers (112_1), the first controller is communicatively connected to the plurality of second controllers, a converter in each converter subarray has a drive controller, the plurality of second controllers and the plurality of converter subarrays are disposed in a one-to-one correspondence, and each of the second controllers of the plurality of second controllers is communicatively connected to a drive controller in a converter in a corresponding converter subarray;
the first controller is configured to synchronously send the n^{th} target voltage adjustment instruction to each of the plurality of second controllers based on an n^{th} piece of target alternating voltage data in a pre-established adjustment sequence in the n^{th} voltage adjustment phase, wherein the adjustment sequence has a first piece of target alternating voltage data to an N^{th} piece of target alternating voltage data that are sequentially arranged;
any one of the plurality of second controllers is configured to send an n^{th} voltage output instruction to a communicatively connected drive controller based on the received n^{th} target voltage adjustment instruction; and
the drive controller is configured to control, based on the received n^{th} voltage output instruction, a corresponding converter to establish the n^{th} target alternating voltage.

2. The black start controller according to claim 1, wherein the adjustment sequence further comprises at least one piece of power equalization control data, in the adjustment sequence, the n^{th} piece of target alternating voltage data corresponds to and is adjacent to a q^{th} piece of power equalization control data in the at least one piece of power equalization control data, and the n^{th} piece of target alternating voltage data is set before the q^{th} piece of power equalization control data, wherein q is a positive integer;
the first controller is further configured to: determine a q^{th} target power of each converter subarray based on the q^{th} piece of power equalization control data in the adjustment sequence, and synchronously send, to the corresponding second controller in each converter subarray based on the q^{th} target power of each converter subarray, a q^{th} power adjustment instruction carrying the corresponding q^{th} target power;
the second controller is further configured to send a q^{th} power output instruction to the communicatively connected drive controller based on the received q^{th} power adjustment instruction; and
the drive controller is further configured to control, based on the received q^{th} power output instruction, the corresponding converter to output the q^{th} target power.

3. The black start controller according to claim 2, wherein in the adjustment sequence, a quantity of pieces of the power equalization control data is the same as a quantity of pieces of the target alternating voltage data, and in the adjustment sequence, the target alternating voltage data and the power equalization control data are alternately arranged; or
in the adjustment sequence, a quantity of pieces of the power equalization control data is less than a quantity of pieces of the target alternating voltage data, and in the adjustment sequence, at least one piece of target alternating voltage data is set between two adjacent pieces of power equalization control data.

4. The black start controller according to claim 2 or 3, wherein the first controller is further configured to: obtain a power of the output port of each converter subarray, determine an average power value of each converter subarray based on the power of the output port of each converter subarray and a quantity of converters in each converter subarray, and determine the determined average power value of each converter subarray as a q^{th} target power of each converter subarray.

5. The black start controller according to any one of claims 1 to 4, wherein the drive controller is further configured to: after controlling a corresponding converter to establish the n^{th} target alternating voltage, control the corresponding converter to correct a phase of the established n^{th} target alternating voltage based on an alternating voltage of an output port of a converter subarray in which the converter is located.

6. The black start controller according to any one of claims 1 to 5, wherein each converter in each converter subarray is a voltage source converter, and the second controller is further configured to synchronously send the n^{th} voltage output instruction to the drive controller in each converter in the corresponding converter subarray; or
each converter in each converter subarray is a voltage source converter; in each converter subarray, one converter is a master converter, and other converters are slave converters; the second controller is further configured to send the n^{th} voltage output instruction to a drive controller in a master converter in the corresponding converter subarray; the drive controller connected to the master converter is further configured to: control, based on the received n^{th} voltage output instruction, the master converter to establish the n^{th} target alternating voltage, and send a slave voltage output command to a drive controller in the slave converter based on the received n^{th} voltage output instruction; and the drive controller in the slave converter is configured to control, based on a received slave voltage output instruction, the slave converter to establish the n^{th} target alternating voltage; or
in each converter subarray, one converter is a voltage source converter, and other converters are current source converters, and the second controller is further configured to send the n^{th} voltage output instruction to a drive controller connected to the voltage source converter.

7. The black start controller according to any one of claims 1 to 6, wherein in the first voltage adjustment phase to the N^{th} voltage adjustment phase, there is an interval between start moments of every two adjacent voltage adjustment phases, and the interval is greater than one power frequency cycle.

8. A power system, comprising: a plurality of direct current sources, a plurality of first transformers, a plurality of control switches, a plurality of converter subarrays, a first alternating current bus, and a black start controller according to claim 1, wherein the plurality of converter subarrays one-to-one correspond to the plurality of direct current sources and one-to-one correspond to the plurality of first transformers, and one of the plurality of converter subarrays corresponds to at least one of the plurality of control switches.

9. A black start control method based on a plurality of converter subarrays, wherein at least one of the plurality of converter subarrays comprises at least one converter, an input port of each of the plurality of converter subarrays is connected to a direct current source, and an output port of each of the plurality of converter subarrays is connected to a first alternating current bus through a first transformer and a control switch; and
the black start control method comprises:
sequentially performing working processes of a first voltage adjustment phase to an N^{th} voltage adjustment phase after controlling the control switch to be turned on and controlling a converter in each converter subarray to be powered on; and in an n^{th} voltage adjustment phase of the first voltage adjustment phase to the N^{th} voltage adjustment phase, synchronously sending an n^{th} target voltage adjustment instruction to each converter subarray, to control each converter in the converter subarray to establish an n^{th} target alternating voltage, so that the n^{th} target alternating voltage is converted by the first transformer into an n^{th} target bus alternating voltage input to the first alternating current bus, wherein
n and N are integers, and N is greater than 1, 1≤n≤N, the n^{th} target alternating voltage is greater than an (n-1)^{th} target alternating voltage, the n^{th} target bus alternating voltage is greater than an (n-1)^{th} target bus alternating voltage, and an N^{th} target bus alternating voltage is a rated alternating voltage of the first alternating current bus.

## Patentansprüche

1. **Schwarzstartsteuerung** (11), basierend auf mehreren Wandler-Subarrays, wobei mindestens eines der mehreren Wandler-Subarrays (20_1) mindestens einen Wandler umfasst, ein Eingangsanschluss jedes der mehreren Wandler-Subarrays mit einer Gleichstromquelle (50_1) verbunden ist und ein Ausgangsanschluss jedes der mehreren Wandler-Subarrays über einen ersten Transformator (40_2) und einen Steuerschalter (12) mit einer ersten Wechselstrom-Sammelschiene (60) verbunden ist, und
die Schwarzstartsteuerung für Folgendes konfiguriert ist: sequentielles Durchführen von Arbeitsprozessen einer ersten Spannungseinstellungsphase bis zu einer N. Spannungseinstellungsphase nach dem Steuern des Steuerschalters, eingeschaltet zu sein, und Steuern eines Wandlers in jedem Wandler-Subarray, angeschaltet zu sein, und in einer n. Spannungseinstellungsphase der ersten Spannungseinstellungsphase bis zu der N. Spannungseinstellungsphase, synchrones Senden einer n. Sollspannungs-Einstellungsanweisung an jedes Wandler-Subarray, um jeden Wandler in dem Wandler-Subarray zu steuern, eine n. Sollwechselspannung herzustellen, so dass die n. Sollwechselspannung durch den ersten Transformator in eine n. Sammelschienen-Sollwechselspannungseingabe in die erste Wechselstrom-Sammelschiene umgewandelt wird, wobei
n und N ganze Zahlen sind und N größer als 1 ist, 1 ≤ n ≤ N, die n. Sollwechselspannung größer als eine (n - 1). Sollwechselspannung ist, die n. Sammelschienen-Sollwechselspannung größer als eine (n - 1). Sammelschienen-Sollwechselspannung ist und eine N. Sammelschienen-Sollwechselspannung eine Nennwechselspannung der ersten Wechselstrom-Sammelschiene ist,
**dadurch gekennzeichnet, dass**
die Schwarzstartsteuerung eine erste Steuerung (111) und mehrere zweite Steuerungen (112_1) umfasst, wobei die erste Steuerung kommunikationsfähig mit den mehreren zweiten Steuerungen verbunden ist, ein Wandler in jedem Wandler-Subarray eine Antriebssteuerung aufweist, die mehreren zweiten Steuerungen und die mehreren Wandler-Subarrays in einer Eins-zu-eins-Entsprechung angeordnet sind und jede der zweiten Steuerungen der mehreren zweiten Steuerungen kommunikationsfähig mit einer Antriebssteuerung in einem Wandler in einem entsprechenden Wandler-Subarray verbunden ist,
die erste Steuerung dafür konfiguriert ist, basierend auf einem n. Element von Sollwechselspannungsdaten in einer vorab hergestellten Einstellungssequenz in der n. Spannungseinstellungsphase die n. Sollspannungs-Einstellungsanweisung synchron an jede der mehreren zweiten Steuerungen zu senden, wobei die Einstellungssequenz ein erstes Element von Sollwechselspannungsdaten bis zu einem N. Element von Sollwechselspannungsdaten aufweist, die sequentiell angeordnet sind,
eine beliebige der mehreren zweiten Steuerungen dafür konfiguriert ist, basierend auf der empfangenen n. Sollspannungs-Einstellungsanweisung eine n. Spannungsausgabeanweisung an eine kommunikationsfähig verbundene Antriebssteuerung zu senden, und
die Antriebssteuerung dafür konfiguriert ist, basierend auf der empfangenen n. Spannungsausgabeanweisung einen entsprechenden Wandler zu steuern, die n. Sollwechselspannung herzustellen.

2. Schwarzstartsteuerung nach Anspruch 1, wobei die Einstellungssequenz ferner mindestens ein Element von Leistungsausgleichssteuerdaten umfasst, wobei in der Einstellungssequenz das n. Element von Sollwechselspannungsdaten einem q. Element von Leistungsausgleichssteuerdaten in dem mindestens einen Element von Leistungsausgleichssteuerdaten entspricht und zu diesem benachbart ist, und das n. Element von Sollwechselspannungsdaten vor dem q. Element von Leistungsausgleichssteuerdaten gesetzt wird, wobei q eine positive ganze Zahl ist,
wobei die erste Steuerung ferner für Folgendes konfiguriert ist: Bestimmen einer q. Sollleistung jedes Wandler-Subarrays, basierend auf dem q. Element von Leistungsausgleichssteuerdaten in der Einstellungssequenz und synchrones Senden einer q. Leistungseinstellungsanweisung, welche die entsprechende q. Sollleistung mitführt, an die entsprechende zweite Steuerung in jedem Wandler-Subarray, basierend auf der q. Sollleistung jedes Wandler-Subarrays,
wobei die zweite Steuerung ferner dafür konfiguriert ist, basierend auf der empfangenen q. Leistungseinstellungsanweisung eine q. Leistungsausgabeanweisung an die kommunikationsfähig verbundene Antriebssteuerung zu senden, und
die Antriebssteuerung ferner dafür konfiguriert ist, basierend auf der empfangenen q. Leistungsausgabeanweisung den entsprechenden Wandler zu steuern, die q. Sollleistung auszugeben.

3. Schwarzstartsteuerung nach Anspruch 2, wobei in der Einstellungssequenz eine Menge von Elementen von Leistungsausgleichssteuerdaten gleich einer Menge von Elementen der Sollwechselspannungsdaten ist und in der Einstellungssequenz die Sollwechselspannungsdaten und die Leistungsausgleichssteuerdaten abwechselnd angeordnet sind oder
in der Einstellungssequenz eine Menge von Elementen der Leistungsausgleichssteuerdaten kleiner als eine Menge von Elementen der Sollwechselspannungsdaten ist und in der Einstellungssequenz mindestens ein Element von Sollwechselspannungsdaten zwischen zwei benachbarte Elemente von Leistungsausgleichsdaten gesetzt ist.

4. Schwarzstartsteuerung nach Anspruch 2 oder 3, wobei die erste Steuerung ferner für Folgendes konfiguriert ist: Erlangen einer Leistung des Ausgangsanschlusses jedes Wandler-Subarrays, Bestimmen eines durchschnittlichen Leistungswertes jedes Wandler-Subarrays, basierend auf der Leistung des Ausgangsanschlusses jedes Wandler-Subarrays und einer Menge von Wandlern in jedem Wandler-Subarray, und Bestimmen des bestimmten durchschnittlichen Leistungswertes jedes Wandler-Subarrays als eine q. Sollleistung jedes Wandler-Subarrays.

5. Schwarzstartsteuerung nach einem der Ansprüche 1 bis 4, wobei die Antriebssteuerung ferner für Folgendes konfiguriert ist: nach dem Steuern eines entsprechenden Wandlers, die n. Sollwechselspannung herzustellen, Steuern des entsprechenden Wandlers, eine Phase der hergestellten n. Sollwechselspannung basierend auf einer Wechselspannung eines Ausgangsanschlusses eines Wandler-Subarrays, in dem sich der Wandler befindet, zu korrigieren.

6. Schwarzstartsteuerung nach einem der Ansprüche 1 bis 5, wobei jeder Wandler in jedem Wandler-Subarray ein Spannungsquellenwandler ist und die zweite Steuerung ferner dafür konfiguriert ist, die n. Spannungsausgabeanweisung synchron an die Antriebssteuerung in jedem Wandler in dem entsprechenden Wandler-Subarray zu senden, oder
jeder Wandler in jedem Wandler-Subarray ein Spannungsquellenwandler ist, in jedem Wandler-Subarray ein Wandler ein Hauptwandler ist und weitere Wandler untergeordnete Wandler sind, die zweite Steuerung ferner dafür konfiguriert ist, die n. Spannungsausgabeanweisung an eine Antriebssteuerung in einem Hauptwandler in dem entsprechenden Wandler-Subarray zu senden, die mit dem Hauptwandler verbundene Antriebssteuerung ferner für Folgendes konfiguriert ist: Steuern des Hauptwandlers, basierend auf der empfangenen n. Spannungsausgabeanweisung, die n. Sollwechselspannung herzustellen, und Senden eines Befehls zur untergeordneten Spannungsausgabe an eine Antriebssteuerung in dem untergeordneten Wandler, basierend auf der empfangenen n. Spannungsausgabeanweisung, und die Antriebssteuerung in dem untergeordneten Wandler dafür konfiguriert ist, basierend auf der empfangenen Anweisung zur untergeordneten Spannungsausgabe den untergeordneten Wandler zu steuern, die n. Sollwechselspannung herzustellen, oder in jedem Wandler-Subarray ein Wandler ein Spannungsquellenwandler ist und weitere Wandler Stromquellenwandler sind, und die zweite Steuerung ferner dafür konfiguriert ist, die n. Spannungsausgabeanweisung an eine Antriebssteuerung zu senden, der mit dem Spannungsquellenwandler verbunden ist.

7. Schwarzstartsteuerung nach einem der Ansprüche 1 bis 6, wobei in der ersten Spannungseinstellungsphase bis zur N. Spannungseinstellungsphase zwischen Startmomenten von jeweils zwei benachbarten Spannungseinstellungsphasen eine Zeitspanne liegt und die Zeitspanne größer als ein Leistungsfrequenzzyklus ist.

8. Leistungssystem, Folgendes umfassend: mehrere Gleichstromquellen, mehrere erste Transformatoren, mehrere Steuerschalter, mehrere Wandler-Subarrays, eine erste Wechselstrom-Sammelschiene und eine Schwarzstartsteuerung nach Anspruch 1, wobei die mehreren Wandler-Subarrays eins zu eins den mehreren Gleichstromquellen entsprechen und eins zu eins den mehreren ersten Transformatoren entsprechen und eines der mehreren Wandler-Subarrays mindestens einem der mehreren Steuerschalter entspricht.

9. Verfahren zum Steuern eines Schwarzstarts basierend auf mehreren Wandler-Subarrays, wobei mindestens eines der mehreren Wandler-Subarrays mindestens einen Wandler umfasst, ein Eingangsanschluss jedes der mehreren Wandler-Subarrays mit einer Gleichstromquelle verbunden ist und ein Ausgangsanschluss jedes der mehreren Wandler-Subarrays über einen ersten Transformator und einen Steuerschalter mit einer ersten Wechselstrom-Sammelschiene verbunden ist, und
das Verfahren zum Steuern eines Schwarzstarts Folgendes umfasst:
sequentielles Durchführen von Arbeitsprozessen einer ersten Spannungseinstellungsphase bis zu einer N. Spannungseinstellungsphase nach dem Steuern des Steuerschalters, eingeschaltet zu sein, und Steuern eines Wandlers in jedem Wandler-Subarray, angeschaltet zu sein, und in einer n. Spannungseinstellungsphase der ersten Spannungseinstellungsphase bis zu der N. Spannungseinstellungsphase, synchrones Senden einer n. Sollspannungs-Einstellungsanweisung an jedes Wandler-Subarray, um jeden Wandler in dem Wandler-Subarray zu steuern, eine n. Sollwechselspannung herzustellen, so dass die n. Sollwechselspannung durch den ersten Transformator in eine n. Sammelschienen-Sollwechselspannungseingabe in die erste Wechselstrom-Sammelschiene umgewandelt wird, wobei
n und N ganze Zahlen sind und N größer als 1 ist, 1 ≤ n ≤ N, wobei die n. Sollwechselspannung größer als eine (n - 1). Sollwechselspannung ist, die n. Sammelschienen-Sollwechselspannung größer als eine (n - 1). Sammelschienen-Sollwechselspannung ist und eine N. Sammelschienen-Sollwechselspannung eine Nennwechselspannung der ersten Wechselstrom-Sammelschiene ist.

## Revendications

1. Unité de commande de démarrage autonome (11) basée sur une pluralité de sous-réseaux de convertisseurs, dans laquelle au moins un de la pluralité de sous-réseaux de convertisseurs (20_1) comprend au moins un convertisseur, un port d'entrée de chacun de la pluralité de sous-réseaux de convertisseurs est connecté à une source de courant continu (50_1), et un port de sortie de chacun de la pluralité de sous-réseaux de convertisseurs est connecté à un premier bus à courant alternatif (60) par le biais d'un premier transformateur (40_2) et d'un commutateur de commande (12) ; et
l'unité de commande de démarrage autonome est configurée pour : réaliser séquentiellement des processus de travail d'une première phase d'ajustement de tension à une N^{ième} phase d'ajustement de tension après la commande du commutateur de commande pour qu'il soit allumé et la commande d'un convertisseur dans chaque sous-réseau de convertisseurs pour qu'il soit mis sous tension ; et, dans une n^{ième} phase d'ajustement de tension de la première phase d'ajustement de tension à la N^{ième} phase d'ajustement de tension, envoyer de façon synchrone une n^{ième} instruction d'ajustement de tension cible à chaque sous-réseau de convertisseurs, pour commander chaque convertisseur dans le sous-réseau de convertisseurs pour qu'il établisse une n^{ième} tension alternative cible, de telle sorte que la n^{ième} tension alternative cible soit convertie par le premier transformateur en une n^{ième} entrée de tension alternative de bus cible dans le premier bus à courant alternatif, dans laquelle
n et N sont des nombres entiers, et N est supérieur à 1, 1 ≤ n ≤ N, la n^{ième} tension alternative cible est supérieure à une (n-1)^{ième} tension alternative cible, la n^{ième} tension alternative de bus cible est supérieure à une (n-1)^{ième} tension alternative de bus cible, et une N^{ième} tension alternative de bus cible est une tension alternative nominale du premier bus à courant alternatif, **caractérisé en ce que**
l'unité de commande de démarrage autonome comprend une première unité de commande (111) et une pluralité de secondes unités de commande (112_1),
la première unité de commande est connectée en communication à la pluralité de secondes unités de commande, un convertisseur dans chaque sous-réseau de convertisseurs a une unité de commande d'excitation, la pluralité de secondes unités de commande et la pluralité de sous-réseaux de convertisseurs sont disposés dans une correspondance un-à-un, et chacune des secondes unités de commande de la pluralité de secondes unités de commande est connectée en communication à une unité de commande d'excitation dans un convertisseur dans un sous-réseau correspondant de convertisseurs ;
la première unité de commande est configurée pour envoyer de façon synchrone la n^{ième} instruction d'ajustement de tension cible à chacune de la pluralité de secondes unités de commande, sur la base d'un n^{ième} élément de données de tension alternative cible dans une séquence d'ajustement préétablie dans la n^{ième} phase d'ajustement de tension, dans laquelle la séquence d'ajustement a un premier élément de données de tension alternative cible à un N^{ième} élément de données de tension alternative cible qui sont agencés séquentiellement ;
l'une quelconque de la pluralité de secondes unités de commande est configurée pour envoyer une n^{ième} instruction de sortie de tension à une unité de commande d'excitation connectée en communication, sur la base de la n^{ième} instruction d'ajustement de tension cible reçue ; et
l'unité de commande d'excitation est configurée pour commander, sur la base de la n^{ième} instruction de sortie de tension reçue, un convertisseur correspondant pour qu'il établisse la n^{ième} tension alternative cible.

2. Unité de commande de démarrage autonome selon la revendication 1, dans laquelle la séquence d'ajustement comprend en outre au moins un élément de données de commande d'égalisation de puissance, dans la séquence d'ajustement, le n^{ième} élément de données de tension alternative cible correspond, et est adjacent, à un q^{ième} élément de données de commande d'égalisation de puissance dans l'au moins un élément de données de commande d'égalisation de puissance, et le n^{ième} élément de données de tension alternative cible est réglé avant le q^{ième} élément de données de commande d'égalisation de puissance, dans laquelle q est un nombre entier positif ;
la première unité de commande est en outre configurée pour : déterminer une q^{ième} puissance cible de chaque sous-réseau de convertisseurs, sur la base du q^{ième} élément de données de commande d'égalisation de puissance dans la séquence d'ajustement, et envoyer de façon synchrone, à la seconde unité de commande correspondante dans chaque sous-réseau de convertisseurs, sur la base de la q^{ième} puissance cible de chaque sous-réseau de convertisseurs, une q^{ième} instruction d'ajustement de puissance portant la q^{ième} puissance cible correspondante ;
la seconde unité de commande est en outre configurée pour envoyer une q^{ième} instruction de sortie de puissance à l'unité de commande d'excitation connectée en communication, sur la base de la q^{ième} instruction d'ajustement de puissance reçue ; et l'unité de commande d'excitation est en outre configurée pour commander, sur la base de la q^{ième} instruction de sortie de puissance reçue, le convertisseur correspondant pour qu'il sorte la q^{ième} puissance cible.

3. Unité de commande de démarrage autonome selon la revendication 2, dans laquelle, dans la séquence d'ajustement, une quantité d'éléments des données de commande d'égalisation de puissance est la même qu'une quantité d'éléments des données de tension alternative cible, et, dans la séquence d'ajustement, les données de tension alternative cible et les données de commande d'égalisation de puissance sont agencées de façon alternée ; ou
dans la séquence d'ajustement, une quantité d'éléments des données de commande d'égalisation de puissance est inférieure à une quantité d'éléments des données de tension alternative cible, et, dans la séquence d'ajustement, au moins un élément de données de tension alternative cible est réglé entre deux éléments adjacents de données de commande d'égalisation de puissance.

4. Unité de commande de démarrage autonome selon la revendication 2 ou 3, dans laquelle la première unité de commande est en outre configurée pour : obtenir une puissance du port de sortie de chaque sous-réseau de convertisseurs, déterminer une valeur de puissance moyenne de chaque sous-réseau de convertisseurs, sur la base de la puissance du port de sortie de chaque sous-réseau de convertisseurs et d'une quantité de convertisseurs dans chaque sous-réseau de convertisseurs, et déterminer la valeur de puissance moyenne déterminée de chaque sous-réseau de convertisseurs comme étant une q^{ième} puissance cible de chaque sous-réseau de convertisseurs.

5. Unité de commande de démarrage autonome selon l'une quelconque des revendications 1 à 4, dans laquelle l'unité de commande d'excitation est en outre configurée pour : après la commande d'un convertisseur correspondant pour qu'il établisse la n^{ième} tension alternative cible, commander le convertisseur correspondant pour corriger une phase de la n^{ième} tension alternative cible établie, sur la base d'une tension alternative d'un port de sortie d'un sous-réseau de convertisseurs dans lequel est situé le convertisseur.

6. Unité de commande de démarrage autonome selon l'une quelconque des revendications 1 à 5, dans laquelle chaque convertisseur dans chaque sous-réseau de convertisseurs est un convertisseur de source de tension, et la seconde unité de commande est en outre configurée pour envoyer de façon synchrone la n^{ième} instruction de sortie de tension à l'unité de commande d'excitation dans chaque convertisseur dans le sous-réseau correspondant de convertisseurs ; ou
chaque convertisseur dans chaque sous-réseau de convertisseurs est un convertisseur de source de tension ; dans chaque sous-réseau de convertisseurs, un convertisseur est un convertisseur maître, et d'autres convertisseurs sont des convertisseurs esclaves ; la seconde unité de commande est en outre configurée pour envoyer la n^{ième} instruction de sortie de tension à une unité de commande d'excitation dans un convertisseur maître dans le sous-réseau correspondant de convertisseurs ; l'unité de commande d'excitation connectée au convertisseur maître est en outre configurée pour :
commander, sur la base de la n^{ième} instruction de sortie de tension reçue, le convertisseur maître pour qu'il établisse la n^{ième} tension alternative cible, et envoyer une consigne de sortie de tension esclave à une unité de commande d'excitation dans le convertisseur esclave, sur la base de la n^{ième} instruction de sortie de tension reçue ; et l'unité de commande d'excitation dans le convertisseur esclave est configurée pour commander, sur la base d'une instruction de sortie de tension esclave reçue, le convertisseur esclave pour qu'il établisse la n^{ième} tension alternative cible ; ou
dans chaque sous-réseau de convertisseurs, un convertisseur est un convertisseur de source de tension, et d'autres convertisseurs sont des convertisseurs de source de courant, et la seconde unité de commande est en outre configurée pour envoyer la n^{ième} instruction de sortie de tension à une unité de commande d'excitation connectée au convertisseur de source de tension.

7. Unité de commande de démarrage autonome selon l'une quelconque des revendications 1 à 6, dans laquelle, dans la première phase d'ajustement de tension à la N phase d'ajustement de tension, il y a un intervalle entre des moments de démarrage de chaque paire de phases d'ajustement de tensions adjacentes, et l'intervalle est supérieur à un cycle de fréquence de puissance.

8. Système électrique, comprenant : une pluralité de sources de courant continu, une pluralité de premiers transformateurs, une pluralité de commutateurs de commande, une pluralité de sous-réseaux de convertisseurs, un premier bus à courant alternatif, et une unité de commande de démarrage autonome selon la revendication 1, dans lequel la pluralité de sous-réseaux de convertisseurs correspondent un-à-un à la pluralité de sources de courant continu et correspondent un-à-un à la pluralité de premiers transformateurs, et un de la pluralité de sous-réseaux de convertisseurs correspond à au moins un de la pluralité de commutateurs de commande.

9. Procédé de commande de démarrage autonome basé sur une pluralité de sous-réseaux de convertisseurs, dans lequel au moins un de la pluralité de sous-réseaux de convertisseurs comprend au moins un convertisseur, un port d'entrée de chacun de la pluralité de sous-réseaux de convertisseurs est connecté à une source de courant continu, et un port de sortie de chacun de la pluralité de sous-réseaux de convertisseurs est connecté à un premier bus à courant alternatif par le biais d'un premier transformateur et d'un commutateur de commande ; et
le procédé de commande de démarrage autonome comprend :
la réalisation séquentielle de processus de travail d'une première phase d'ajustement de tension à une N^{ième} phase d'ajustement de tension après la commande du commutateur de commande pour qu'il soit allumé et la commande d'un convertisseur dans chaque sous-réseau de convertisseurs pour qu'il soit mis sous tension ; et, dans une n^{ième} phase d'ajustement de tension de la première phase d'ajustement de tension à la N^{ième} phase d'ajustement de tension, l'envoi synchrone d'une n^{ième} instruction d'ajustement de tension cible à chaque sous-réseau de convertisseurs, pour commander chaque convertisseur dans le sous-réseau de convertisseurs pour qu'il établisse une n^{ième} tension alternative cible, de telle sorte que la n^{ième} tension alternative cible soit convertie par le premier transformateur en une n^{ième} entrée de tension alternative de bus cible dans le premier bus à courant alternatif, dans lequel
n et N sont des nombres entiers, et N est supérieur à 1, 1 ≤ n ≤ N, la n^{ième} tension alternative cible est supérieure à une (n-1)^{ième} tension alternative cible, la n^{ième} tension alternative de bus cible est supérieure à une (n-1)^{ième} tension alternative de bus cible, et une N^{ième} tension alternative de bus cible est une tension alternative nominale du premier bus à courant alternatif.
